# EUROPÄISCHE PATENTSCHRIFT

(11) **EP 2 884 429 B1**
(45) Veröffentlichungstag und Bekanntmachung des Hinweises auf die Patenterteilung: **03.05.2017**
(21) Anmeldenummer: 14197106.9
(22) Anmeldetag: 11.11.2011
(51) Int. Cl.: G06K 19/07, G06F 3/01, G06F 3/03, G06F 3/0346

(54) **Dokument, Lesegerät, elektronisches System, Verfahren zur Erzeugung eines Eingabesignals und Verfahren zur Prüfung der Echtheit eines Dokuments**
Document, reader, electronic system, method for generating an input signal and method of checking the authenticity of a document
Document, appareil de lecture, système électronique, procédé de production d'un signal à l'entrée et procédé de contrôlé de l'authenticité d'un document

(30) Priorität: 01.11.2011 DE 102011085537
(43) Veröffentlichungstag der Anmeldung: 17.06.2015
(62) Teilanmeldung aus: 11791483.8
(73) Patentinhaber: Bundesdruckerei GmbH, 10958 Berlin (DE)
(72) Erfinder: Tietke, Markus, 12439 Berlin (DE); Fischer, Jörg, 13053 Berlin (DE); Fritze, Frank, 12487 Berlin (DE); Troelenberg, Stefan, 10958 Berlin (DE)
(74) Vertreter: Richardt Patentanwälte PartG mbB

(56) Entgegenhaltungen:
- EP-A1- 2 182 473
- Klaus Ludwig ET AL: "Interaktion mit dem Nutzer", Kunststoffe, 30. Juni 2011 (2011-06-30), Seiten 72-75, XP055180157, München Gefunden im Internet: URL:https://www.kunststoffe.de/_storage/as set/536414/storage/master/file/5793451/dow nload/Interaktion mit dem Nutzer.pdf [gefunden am 2015-03-30]

## Beschreibung

Die Erfindung betrifft insbesondere ein Dokument, wie zum Beispiel ein Wert- oder Sicherheitsdokument, insbesondere ein ID-Dokument oder ein Zahlungsmittel, mit mindestens einer Antenne sowie ein Lesegerät für ein solches Dokument.

Die vorliegende Erfindung ist eine Teilanmeldung von EP 11 791 483.8, deren Offenbarungsgehalt hiermit vollumfänglich durch In Bezugnahme zum Gegenstand der vorliegenden Teilanmeldung gemacht wird.

Dokumente mit einer Antenne zur kontaktlosen Einkopplung von Energie sind an sich aus dem Stand der Technik bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

RFID-Transponder sind für verschiedene Dokumente einsetzbar, insbesondere in Chipkarten, beispielsweise zur Realisierung einer elektronischen Geldbörse oder für Electronic Ticketing. Desweiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktlosen Schnittstelle, beispielsweise einem RFID-Interface und/oder NFC-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Entsprechende Chipkarten-Kommunikationsprotokolle und -verfahren sind zum Beispiel in der Norm ISO 14443 festgelegt.

Aus der WO 2008/145505 A1 ist ein Wert- oder Sicherheitsdokument mit einer Antenne und einer Anzeigevorrichtung zur Wiedergabe einer Bildsequenz und einem Bedienelement zur Navigation in der Bildsequenz bekannt, wobei es sich bei dem Bedienelement zum Beispiel um einen Schiebeschalter mit verschiedenen Raststellungen, ein Drehrad, ein berührungsempfindliches Eingabefeld oder einen anderen Multifunktionsschalter handeln kann. Aus der DE 10 2010 003 586 ist ein Wert- oder Sicherheitsdokument bekannt, bei dem ein Touchpad für die Nutzereingabe dient.

Aus WO 2011/039047 A1 ist ein Dokument mit einer Antenne und einem Überspannungsschutz bekannt.

Aus der EP 2 182 473 A1 ist ein Dokument bekannt, das wenigstens eine integrierte Schaltung und eine planare Antenne umfasst, die mit der integrierten Schaltung verbunden ist, um eine kontaktlose Nahfeld-Kommunikation mit einem externen System aufzubauen. Das Dokument weist mindestens eine periphere Komponente, beispielsweise eine Diode oder einen Summer umfasst, die mit der Antenne verbunden ist, so dass diese ferngespeist werden kann.

Es ist ferner an sich bekannt, Wert- oder Sicherheitsdokumente mit ein oder mehreren optischen Sicherheitsmerkmalen des Wert- oder Sicherheitsdrucks zu versehen. Solche optischen Sicherheitsmerkmale können visuell durch einen Benutzer und/oder maschinell durch einen optischen Sensor geprüft werden. Zu den optischen Sicherheitsmerkmalen zählen beispielsweise (vgl. WO 2009/127474):
- Guillochen: Guillochen werden mit Hilfe von so genanntem Liniendruck auf das Dokument aufgedruckt. Sie bestehen im Allgemeinen aus in verschiedenen Farben übereinander gedruckten Wellen- und Schleifenmustern;
- Mikro-Schrift: Hierbei handelt es sich um aufgedruckte Schriftzüge in kleinster Schrift. Mit bloßem Auge lässt sich die Mikro-Schrift kaum erkennen. Beispielsweise ist Mikro-Schrift auf den Euro-Banknoten als Bildelemente in die Motive eingearbeitet. Mit Hilfe einer Lupe kann die Mikro-Schrift gelesen werden;
- Metamere Systeme: Aufgrund metamerer Farbgleichheit können unterschiedliche spektrale Zusammensetzungen des Lichts bei Menschen den gleichen Farbeindruck hervorrufen;
- Aufdrucke mit Fluoreszenz, Phosphoreszenz und/oder Up-Conversion-Farben;
- Aufdrucke mit Infrarot-Farbe: Die Farbe wird nur unter Infrarot-Strahlung für Lesegeräte mit entsprechenden Sensoren sichtbar. Beispielsweise sind Euro-Banknoten mit diesem optischen Sicherheitsmerkmal ausgestattet;
- Barcodes, insbesondere ein- oder zweidimensionale Barcodes;
- Optisch variable Farben (OVI - Optical Variable Ink): Bei einer optisch variablen Farbe ändert sich der Farbeindruck je nach Betrachtungswinkel, da das Licht an den Pigmenten gebrochen, gestreut oder reflektiert wird;
- Hologramme und Kinegramme (transparent oder reflektierend);
- Wasserzeichen, insbesondere digitale Wasserzeichen, die eine maschinell auslesbare Information tragen;
- Passerdruck: Verschiedene Muster oder Symbole werden so über- oder aneinander gedruckt, dass sie zusammen ein bestimmtes Bild ergeben. Kleinste Abweichungen im Stand, d.h. so genannte Passerungenauigkeiten, können leicht mit bloßem Auge erkannt werden. Wenn sich die Teilbilder auf verschiedenen Seiten des Dokuments, wie zum Beispiel einer Banknote, befinden, bezeichnet man dieses optische Sicherheitsmerkmal als Durchsichtspasser;
- Durchsichtsfenster: Ein Fenster aus einer transparenten Kunststofffolie ist in dem Dokument eingearbeitet;
- Melierfasern: Dem Papier des Dokuments werden Fasern beigemischt, die unter UV-Licht in verschiedenen Farben leuchten;
- Sicherheitsfaden;
- Mikroperforation.

Das Vorhandensein eines oder mehrerer der Sicherheitsmerkmale erhöht die Sicherheit gegen Manipulationen weiter.

Der Erfindung liegt demgegenüber die Aufgabe zugrunde, ein verbessertes Dokument mit einer Antenne zur kontaktlosen Einkopplung von elektrischer Energie zu schaffen, insbesondere ein Wert- oder Sicherheitsdokument, sowie ein Lesegerät, ein elektronisches System, ein Verfahren zur Erzeugung eines Eingabesignals und ein Verfahren zur Prüfung der Echtheit eines Dokuments.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Unter einem "Dokument" wird erfindungsgemäß ein Dokument mit einer kontaktlosen Schnittstelle zur elektromagnetischen Einkopplung von Energie verstanden, wobei über die kontaktlose Schnittstelle ein Kommunikationskanal mit einem Lesegerät aufgebaut werden kann. Ferner kann über die kontaktlose Schnittstelle auch die Energieversorgung des Dokuments erfolgen; das Dokument kann aber auch über eine autarke Energieversorgung, wie z.B. eine Batterie, verfügen.

Unter einem "Lesegerät" wird hier ein Lesegerät mit einer kontaktlosen Schnittstelle verstanden, welche zur elektromagnetischen Kopplung mit der Antenne eines Dokuments dient, wobei über die kontaktlose Schnittstelle ein Kommunikationskanal zu dem Dokument aufgebaut werden kann; je nach Ausführungsform kann auch die Energieversorgung des Dokuments über die kontaktlose Schnittstelle des Lesegerätes erfolgen. Bei dem Lesegerät kann es sich um ein Peripheriegerät eines Computers, wie z.B. eines Personal Computers, eines Smartphones, eines Tablet-Computers oder dergleichen, handeln, oder das Lesegerät kann einen integralen Bestandteil eines solchen Computers bilden. Ein Computer mit einem integrierten Lesegerät wird hier auch als "Lesegerät" bezeichnet.

Unter einer "Bewegung eines Dokuments" wird hier eine Relativbewegung des Dokuments relativ zu einem Lesegerät verstanden. Für eine solche Relativbewegung kann ein Benutzer also entweder das Dokument im Raum bewegen, wobei das Lesegerät nicht bewegt wird, oder das Lesegerät im Raum bewegen, wobei das Dokument nicht bewegt wird oder eine räumliche Bewegung mit sowohl dem Lesegerät als auch dem Dokument durchführen, beispielsweise um eine Geste auszuführen, die ein entsprechendes Eingabesignal zur Folge hat.

Nach Ausführungsformen der Erfindung hat ein erfindungsgemäßes Dokument zumindest eine Antenne zur kontaktlosen Einkopplung von elektrischer Energie eines elektromagnetischen Feldes, insbesondere zur drahtlosen Kommunikation und/oder Energieversorgung. Bei dem elektromagnetischen Feld kann es sich um ein elektromagnetisches Wechselfeld, zum Beispiel im Kilohertz-, Megahertz- oder Gigahertz-Bereich, handeln, insbesondere einer Frequenz von 13,56 MHz. Insbesondere kann das elektromagnetische Feld einem RFID- und/oder NFC-Standard entsprechen.

Das Dokument hat einen nichtflüchtigen Programmspeicher zur Speicherung eines ausführbaren Programms sowie Prozessormittel, insbesondere mindestens einen Mikroprozessor, zur Ausführung des Programms. Sobald ausreichend elektrische Energie über die Antenne eingekoppelt wird und die erforderliche Betriebsspannung für die Prozessormittel zur Verfügung steht, werden die Programminstruktionen des Programms aus dem Programmspeicher gelesen und durch die Prozessormittel ausgeführt. Hierzu können die Prozessormittel einen Oszillator aufweisen, der aufgrund der Einkopplung der elektrischen Energie anschwingt und ein Taktsignal für die Prozessormittel generiert. Alternativ oder zusätzlich kann dieses Taktsignal auch über das elektromagnetische Feld geliefert werden.

Nach dem Start der Ausführung des Programms durch die Prozessormittel aufgrund der hinreichenden Einkopplung von elektrischer Energie kann der Benutzer des Dokuments eine Eingabe in das Programm tätigen, indem der Benutzer das Dokument innerhalb des elektromagnetischen Feldes bewegt, wie zum Beispiel translatorisch und/oder rotatorisch. Zur Erzeugung eines Eingabesignals aufgrund einer solchen Bewegung des Dokuments in dem Feld beinhaltet das Dokument Signalerzeugungsmittel zur Erzeugung eines Eingabesignals zur Eingabe in das von dem Prozessormitteln ausgeführte Programm. Die Signalerzeugungsmittel sind so ausgebildet, dass das Eingabesignal von einer lokalen Feldstärke des elektromagnetischen Feldes oder zumindest einer Richtungskomponente der lokalen Feldstärke abhängt, nämlich zumindest einer von dem Feld in eine der Antennen des Dokuments induzierten Antennenspannung.

Nach einer Ausführungsform der Erfindung hat das Dokument eine Batterie zur Energieversorgung von einer oder mehrerer seiner Komponenten, wie zum Beispiel der Prozessormittel, der Signalerzeugungsmittel, der Nutzerschnittstelle und/oder einer Anzeigevorrichtung. Bei der Batterie kann es sich um eine Primärbatterie oder um eine wiederaufladbare Sekundärbatterie handeln. Beispielsweise dient die zumindest eine Antenne bei dieser Ausführungsform zur Kommunikation mit einem Lesegerät, wobei die hierzu eingekoppelte elektrische Energie nicht zur Energieversorgung der Komponenten des Dokuments verwendet wird. In diesem Fall liefert die Batterie die Betriebsspannung insbesondere für die Prozessormittel, welche das Programm ausführen. Wird bei laufendem Programm von den Signalerzeugungsmitteln ein Eingabesignal erzeugt, so wird dieses in das Programm eingegeben. Alternativ dient die Antenne zur Energieversorgung eines Teils der Komponenten des Dokuments, beispielsweise nur zur Energieversorgung der Signalerzeugungsmittel, welche die von der Batterie gelieferte Betriebsspannung für die Prozessormittel und die weiteren Komponenten des Dokuments z. B. aufgrund der Erkennung einer Geste einschalten.

Nach einer Ausführungsform der Erfindung hat das Dokument einen von einem Nutzer betätigbaren Schalter zum Ein- und Ausschalten der Energieversorgung. Dies ist vorteilhaft bei einer Ausführungsform mit Batterie, um die Lebensdauer der Batterie zu maximieren. Durch die Einschaltung der Energieversorgung wird bei dieser Ausführungsform automatisch die Programmausführung durch die Prozessormittel gestartet. Kippt der Benutzer das Dokument innerhalb des elektromagnetischen Feldes durch eine rotatorische Bewegung um einen gewissen Winkel, ohne das Dokument translatorisch zu bewegen, so führt dies dazu, dass sich die zu der Antenne senkrecht verlaufende Richtungskomponente des elektromagnetischen Feldes ändert, was zu einer Änderung der Antennenspannung führt. Dies wird durch eine Signalauswertung von den Signalerzeugungsmitteln sensiert und in ein entsprechendes Eingabesignal übersetzt, d.h. die Signalerzeugungsmittel erzeugen in Abhängigkeit von einem Ergebnis der Signalauswertung ein Eingabesignal.

Bei einem inhomogenen elektromagnetischen Feld ändert sich die sensierte lokale Feldstärke auch dann, wenn das Dokument translatorisch innerhalb des Feldes bewegt wird, da das elektromagnetische Feld in Abhängigkeit von dem Ort des Dokuments unterschiedlicher Feldstärken und Richtungen hat, und sich dadurch die Antennenspannung ändert.

Nach einer Ausführungsform der Erfindung sind die Signalerzeugungsmittel zur Gestenerkennung ausgebildet, wobei eine Geste aus dem zeitlichen Verlauf der Antennenspannung erkannt wird. Beispielsweise kann das Kippen des Dokuments innerhalb des elektromagnetischen Feldes und die damit einhergehende Abschwächung der senkrecht auf der Antenne stehenden Richtungskomponente des elektromagnetischen Feldes von den Signalerzeugungsmitteln erkannt werden, und zwar als Geste, beispielsweise zur Eingabe einer Nutzerbestätigung. In diesem Fall wird dann von den Signalerzeugungsmitteln ein Bestätigungssignal generiert und beispielsweise in das von den Prozessormitteln ausgeführte Programm eingegeben, sodass aufgrund des Bestätigungssignals eine Aktion ausgelöst werden kann, weiche der Benutzer durch das Kippen des Dokuments in dem Feld bestätigt hat. Dies kann z.B. dadurch erfolgen, dass durch das von den Signalerzeugungsmitteln erzeugte Signal ein Stromkreis geschlossen wird, der den Prozessor aktiviert und/oder z.B. eine LED leuchten lässt.

Nach einer Ausführungsform der Erfindung sind die Signalerzeugungsmittel zur Erkennung von kontinuierlichen Gesten und/oder diskreten Gesten ausgebildet. Bei kontinuierlichen Gesten besteht eine direkte Verbindung zwischen der durch das Dokument über die Antennenspannung sensierten Bewegung und einem Zustand des Dokuments, beispielsweise der Position eines auf einem Display des Dokuments angezeigten Cursor. Bei diskreten Gesten handelt es sich hingegen um beschränkte Mengen von eindeutigen Gesten, mit denen beispielsweise jeweils eine Aktion verknüpft ist, wie z.B. die Eingabe einer Bestätigung. Zur Erkennung solcher Gesten können die Signalerzeugungsmittel zur Ausführung eines geeigneten Verfahrens zur Mustererkennung ausgebildet sein; solche Verfahren sind an sich aus dem Stand der Technik bekannt.

Durch eine solche Gestenerkennung können unterschiedliche Daten in das Dokument eingegeben werden, wie zum Beispiel Kommandos oder Nutzerdaten:
- Eingabe einer Bestätigung,
- Eingabe von einem oder mehreren alphanumerischen Zeichen, insbesondere zur Eingabe eines Passworts oder einer geheimen Kennung,
- Eingabe eines Freischaltkommandos zur Freischaltung des Dokuments,
- Eingabe eines Navigationskommandos, beispielsweise zur Bewegung eines Cursors auf einer Anzeigevorrichtung des Dokuments, zur Eingabe einer Auswahl eines Icons und/oder zur Navigation entlang einer auf der Anzeigevorrichtung anzeigbaren Bildsequenz.

Ausführungsformen der Erfindung sind besonders vorteilhaft, da eine Eingabemöglichkeit in ein Dokument, insbesondere eine kontaktlose Chipkarte, geschaffen wird, welche technisch mit geringem Aufwand implementierbar ist und dabei ein höchstes Maß an Sicherheit verbunden mit optimalem Handhabungskomfort gewährleistet, wobei nutzerseitig keine Investition zum Beispiel in einen Klasse 2- oder 3-Chipkartenterminal getätigt werden muss, um dieses Höchstmaß an Sicherheit zu erreichen.

Dies ist dadurch gewährleistet, dass es Ausführungsformen der Erfindung ermöglichen, sicherheitskritische Daten oder Kommandos, wie zum Beispiel eine PIN oder ein Freischaltkommando, unmittelbar in das Dokument einzugeben, ohne dass diese Daten zum Beispiel über eine Tastatur eines Peripheriegeräts oder eines Computers eingegeben werden müssten. Hierdurch ist insbesondere sichergestellt, dass solche sicherheitskritischen Daten nicht durch Schadprogramme, insbesondere sogenannte Trojaner, von Dritten unerlaubterweise ausgespäht und/oder manipuliert werden können.

Hinsichtlich des technischen Realisierungsaufwandes ist es besonders vorteilhaft, dass eine aufwendige Integration zum Beispiel eines Touchpads oder von mechanischen Betätigungselementen, wie zum Beispiel Schaltern oder Schiebern, in das Dokument nicht erforderlich ist. Kapazitive Touchpanel sind nämlich empfindlich gegenüber Feuchte. Resisitive Touchpanel z.B. mit ITO-Folie sind empfindlich gegenüber mechanischer Belastung wie Biegen oder Stoß und Kratzer. Im Gegensatz dazu können Ausführungsformen der Erfindung programmtechnisch implementiert werden, da die ohnehin erforderliche Antenne zur Einkopplung der elektrischen Energie eine Antennenspannung liefert, die bereits für die Bewegung des Dokuments in einem elektromagnetischen Feld, insbesondere die Ausführung einer Geste, repräsentativ ist. Aufgrund der Auswertung der Antennenspannung, insbesondere durch eine Mustererkennung, kann ein von den Signalerzeugungsmitteln ausgeführtes Programm eine bestimmte Geste erkennen und daraufhin ein diese Geste repräsentierendes Eingabesignal erzeugen.

Ausführungsformen der Erfindung sind ferner besonders vorteilhaft, da für einen Benutzer eine Eingabemöglichkeit zur Eingabe eines Eingabesignals in das Dokument geschaffen wird, welche gänzlich ohne mechanische Elemente auskommt und daher verschleißfrei und äußerst robust ist, sodass auch Anwendungen mit rauen Umweltbedingungen, wie zum Beispiel Staub, Schmutz und hohe Luftfeuchtigkeit, durch die Erfindung ermöglicht werden.
Nach Ausführungsformen der Erfindung dient eine einzige Antenne des Dokuments, welche zum Beispiel gemäß ISO 14443 ausgebildet sein kann für die Einkopplung von elektrischer Energie und/oder zur Datenübertragung z.B. nach ISO 14443 und auch zur Sensierung einer geänderten Feldstärke oder einer geänderten Richtungskomponente der Feldstärke für die Erzeugung eines Eingabesignals.

Nach Ausführungsformen der Erfindung hat das Dokument mindestens zwei Antennen, von denen mindestens eine zur Einkopplung von elektrischer Energie für die Energieversorgung insbesondere der Prozessormitteln und/oder der weiteren Komponenten des Dokuments dient, und/oder zur Datenübertragung z.B. gemäß ISO 14443, wobei zumindest die andere der beiden Antennen die Antennenspannung für die Gestenerkennung liefert.

Nach einer Ausführungsform der Erfindung hat das Dokument eine Antenne zur kontaktlosen Einkopplung von elektrischer Energie für die Energieversorgung der Prozessormittel und/oder zur Datenübertragung z.B. gemäß ISO 14443 und der weiteren Komponenten sowie ein oder mehrere Zusatzantennen für die Gestenerkennung, wobei diese Zusatzantennen in der durch das Dokument aufgespannten Ebene an unterschiedlichen Stellen angeordnet sein können.

Nach einer Ausführungsform der Erfindung hat das Dokument eine Antenne, insbesondere eine Zusatzantenne, oder ein Antennenpaar, insbesondere ein Zusatz-Antennenpaar, für die Sensierung einer Änderung der lokalen Feldstärke in einer bestimmten räumlichen Richtung relativ zu dem Dokument, wie zum Beispiel je eine Antenne oder ein Antennenpaar zur Sensierung einer Bewegung des Dokuments in X- und in Y-Richtung.

Nach einer Ausführungsform der Erfindung hat das Dokument eine Nutzer-Schnittstelle zur Ausgabe einer Eingabeaufforderung. Beispielsweise wird die Eingabeaufforderung durch das von den Prozessormitteln ausgeführte Programm generiert und dann auf einer in den Dokumentenkörper des Dokuments integrierten Anzeigevorrichtung ausgegeben. Der Benutzer des Dokuments führt daraufhin eine oder mehrere Gesten mit dem Dokument innerhalb des elektrischen Feldes aus, um auf diese Art und Weise ein oder mehrere Daten, das heißt beispielsweise Kommandos oder Nutzerdaten, in das Dokument einzugeben.

Nach einer Ausführungsform der Erfindung hat das Dokument einen Dokumentenkörper, in den eine Anzeigevorrichtung, das heißt ein sogenanntes Display, integriert ist. Hierbei kann es sich um eine bistabile Anzeigevorrichtung, eine elektrophoretische Anzeige, eine elektrochrome Anzeige, eine Flüssigkristallanzeige (LCD), LED-Anzeige, insbesondere anorganische LED- oder organische LED-Anzeige (OLED), Drehelementenanzeige, Balkenanzeige, Fotolumineszenz-Löschungsanzeige oder eine Anzeige auf Basis des Electrowetting-Effekts oder eine Hybridanzeige handeln. Insbesondere kann es sich bei der Anzeigevorrichtung um ein Aktiv- oder Passiv-Matrixdisplay oder eine Segmentanzeige handeln.

Nach Ausführungsformen der Erfindung handelt es sich bei dem Dokument um ein papierbasiertes und/oder kunststoffbasiertes Dokument, insbesondere ein Wert-oder Sicherheitsdokument, wie zum Beispiel ein Ausweisdokument, insbesondere einen Reisepass, Personalausweis, Visum oder einen Führerschein, Fahrzeugschein, Fahrzeugbrief, Firmenausweis, Gesundheitskarte oder ein anderes ID-Dokument oder eine Chipkarte, Zahlungsmittel, insbesondere eine Banknote, Bankkarte oder Kreditkarte, einen Frachtbrief oder einen sonstigen Berechtigungsnachweis.

Nach Ausführungsformen der Erfindung hat das Dokument Abmessungen gemäß ISO 7816 oder ISO 7810, beispielsweise ID-1, ID-2, ID-3, ID-00, ID-000.

Nach Ausführungsformen der Erfindung beträgt die Dicke des Dokuments weniger als 2 mm, vorzugsweise weniger als 1 mm, beispielsweise ca. 0,76 mm.

Nach einer Ausführungsform der Erfindung kann der Benutzer durch Bewegung des Dokuments in dem elektromagnetschen Feld, das heißt durch eine Geste, die Position eines Cursors, das heißt eines sogenannten Mauszeigers, der von der Anzeigevorrichtung des Dokuments angezeigt wird, bestimmen. Mit Hilfe des Cursors kann der Benutzer zum Beispiel ein bestimmtes, auf der Anzeigevorrichtung angezeigtes Bildelement auswählen. Bei einem solchen Bildelement kann es sich um eine Repräsentation eines Elements einer grafischen Benutzeroberfläche des Dokuments handeln, insbesondere um ein sogenanntes Computer-Icon. Durch Auswahl eines solchen Icons, das von der Anzeigevorrichtung angezeigt wird, mit Hilfe der Cursors, kann der Benutzer eine bestimmte, dem Icon zugeordnete Funktion auswählen, die dann durch die Prozessormittel ausgeführt wird.

Nach einer Ausführungsform der Erfindung beinhaltet das Dokument einen elektronischen Speicher zur Speicherung von mehreren Bildern, die zum Beispiel eine Bildsequenz bilden können. Bei den verschiedenen Bildern kann es sich um digitale Fotos des Benutzers handeln, die aus verschiedenen Richtungen aufgenommen worden sind. Durch Bewegung des Dokuments in dem elektrischen Feld kann der Benutzer zum Beispiel ein bestimmtes Bild für die Anzeige auf der Anzeigevorrichtung auswählen, indem er entlang dieser Bildsequenz navigiert.

Nach einer Ausführungsform der Erfindung kann der Benutzer durch eine bestimmte Bewegung des Dokuments in dem Feld, das heißt eine bestimmte Geste, eine zuvor mit Hilfe des Cursors betätigte Auswahl bestätigen, sodass dadurch zum Beispiel die Ausführung einer dem betreffenden Icon zugeordneten Funktion durch die Prozessormittel gestartet wird. Hierdurch kann insbesondere die Funktionalität einer Computermaus in dem Dokument zur Verfügung gestellt werden, wobei die bestimmte Geste analog zu einem Mausklick mit einer Computermaus ist. Beispielsweise kann der Benutzer durch Kippen des Dokuments nach links oder rechts ein bestimmtes Icon oder ein bestimmtes Bild der Bildsequenz auswählen und diese Auswahl anschließend durch ein Kippen des Dokuments nach vorn oder hinten bestätigen, sodass die dem Icon zugeordnete Funktion anschließend ausgeführt bzw. das ausgewählte Bild auf der Anzeigevorrichtung angezeigt wird.

Nach Ausführungsformen der Erfindung beinhalten die Prozessormittel eine Logikschaltung, insbesondere einen Mikroprozessor, wobei der Mikroprozessor als integrierte elektronische Schaltung, insbesondere als Halbleiterschaltung, und/ oder polymerelektronische Schaltung, insbesondere gedruckte Schaltung, ausgeführt sein kann. Die Signalerzeugungsmittel können durch ein Programmmodul realisiert werden, welches von den Prozessormitteln ausgeführt wird; alternativ können die Signalerzeugungsmittel eine den Prozessormitteln separate Schaltungskomponente beinhalten, wobei es sich hierbei ebenfalls um eine Halbleiterschaltung und/oder gedruckte polymerelektronische Schaltung handeln kann.

In einem weiteren Aspekt betrifft die Erfindung ein elektronisches System mit zumindest einem erfindungsgemäßen Dokument und einem Lesegerät, wobei das Lesegerät zur Erzeugung eines elektrischen Feldes ausgebildet ist, und zwar zur kontaktlosen Energieversorgung des Dokuments und/oder für die Kommunikation zwischen dem Lesegerät und dem Dokument, beispielsweise nach einem RFID- oder NFC-Verfahren.

In einem weiteren Aspekt betrifft die Erfindung ein Lesegerät für ein Dokument mit zumindest einer Antenne zur elektromagnetischen Kopplung mit einer Antenne eines Dokuments, Mitteln zur Sensierung des zeitlichen Verlaufs einer Antennenspannung der Antenne des Lesegerätes, wobei die Antennenspannung von einem Kopplungsfaktor der elektromagnetischen Kopplung abhängt, und Signalerzeugungsmitteln zur Erzeugung eines Eingabesignals in Abhängigkeit von dem sensierten zeitlichen Verlauf der Antennenspannung

Im Unterschied zu der o.g. Implementierung des erfinderischen Konzepts innerhalb des Dokuments erfolgt also bei dem hier betrachteten Aspekt der Erfindung die Signalerzeugung nicht in dem Dokument selbst, sondern außerhalb des Dokuments, nämlich in dem Lesegerät bzw. in dem Computer.

Nach Ausführungsformen der Erfindung ermöglicht das Lesegerät eine Sensierung der Bewegung des Dokuments, da sich aufgrund einer Bewegung des Dokuments relativ zu dem Lesegerät der Kopplungsfaktor ändert. Das Lesegerät bildet nach dem Transformatorprinzip die Primärseite und das Dokument die Sekundärseite bezüglich der elektromagnetischen Kopplung.

Durch eine Variation des Kopplungsfaktors variiert dementsprechend die von der Sekundärseite auf die Primärseite ausgeübte Last, was eine entsprechende Schwankung der primärseitigen Antennenspannung zur Folge hat. Bringt der Benutzer das Dokument beispielsweise in die Nähe des Lesegeräts, so steigt dadurch der Kopplungsfaktor an und die Last steigt, so dass die Amplitude der Antennenspannung sinkt. Entfernt dagegen der Benutzer das Dokument von dem Lesegerät, so sinkt dementsprechend der Kopplungsfaktor, die Last nimmt ab und die Amplitude der primärseitigen Antennenspannung steigt.

Hierdurch wird es ermöglicht, eine Geste, die der Benutzer durch eine Relativbewegung des Dokuments zu dem Lesegerät durchführt, zu sensieren, da aufgrund dieser Relativbewegung der Kopplungsfaktor und damit die primärseitige Antennenspannung schwankt. Dieser zeitliche Verlauf der primärseitigen Antennenspannung kann durch Signalerzeugungsmittel verarbeitet werden, beispielsweise um aus dem zeitlichen Verlauf der Antennenspannung eine Geste zu erkennen, um aufgrund der erkannten Geste ein entsprechendes Eingabesignal zu erzeugen.

Nach einer Ausführungsform der Erfindung erfolgt die Sensierung der Antennenspannung durch einen Spannungssensor des Lesegeräts, der ein Signal erzeugt, welches von der Amplitude der Antennenspannung abhängt. Ein solches Signal kann z.B. mithilfe eines Hüllkurven-Empfängers erzeugt werden.

Nach einer Ausführungsform der Erfindung hat das Lesegerät zumindest zwei Antennen, deren Antennenspannungen sensiert werden, um Schwankungen der Antennenspannungen aufgrund einer Veränderung des Kopplungsfaktors zu sensieren. Dies hat den Vorteil einer verbesserten räumlichen Auflösung der sensierten Relativbewegung von Dokument und Lesegerät; insbesondere kann dies eine Detektion der Bewegung in X- und Y-Richtung ermöglichen.

In einem weiteren Aspekt betrifft die Erfindung ein elektronisches System mit einem solchen Lesegerät.

In einem weiteren Aspekt betrifft die Erfindung ein Verfahren zur Eingabe von Daten in ein Dokument mit folgenden Schritten:
- Einbringung des Dokuments in ein elektrisches Feld, sodass über die zumindest eine Antenne des Dokuments elektrische Energie eingekoppelt wird und die Ausführung des Programms durch die Prozessormittel automatisch gestartet wird,
- Bewegung des Dokuments innerhalb des elektrischen Feldes, wobei eine Änderung der Antennenspannung sensiert wird,
- Erzeugung eines Eingabesignals durch die Signalerzeugungsmittel in Abhängigkeit von der Änderung,
- Eingabe des Eingabesignals in das von den Prozessormitteln ausgeführte Programm.

Beispielsweise wird das Dokument von dem Benutzer nahe an das Lesegerät gehalten, sodass die Antennenspannung der Antenne oberhalb der für den Betrieb des Dokuments erforderlichen Betriebsspannung liegt, beispielsweise in einem Abstand von höchstens 15 cm. Es sind aber auch größere Abstände von z.B. 2 m bis 5 m möglich. Durch Bewegung des Dokuments innerhalb des Feldes, insbesondere durch eine von dem Benutzer mit dem Dokument ausgeführten Geste, kann dann die Antennenspannung absinken, ohne dass die erforderliche Betriebsspannung unterschritten wird.

In einem weiteren Aspekt betrifft die Erfindung ein Dokument mit einer optischen und/oder akustischen Ausgabeeinheit, mit zumindest ersten und zweiten Antennen zur kontaktlosen Einkopplung von elektrischer Energie eines elektrischen Feldes für den Betrieb der Ausgabeeinheit, wobei die ersten und zweiten Antennen bei gleicher Feldstärke je eine Spannung entgegengesetzter Polarität erzeugen und räumlich versetzt auf oder in dem Dokument angeordnet sind, sodass die Ausgabeeinheit aufgrund einer Bewegung des Dokuments in einem elektrischen Feld unterschiedliche Spannungssignale von den ersten und zweiten Antennen empfängt. Bei dieser Ausführungsform kann, muss aber nicht ein Prozessor oder Microcontroler zur Ausführung eines Programms vorgesehen sein. Insbesondere kann diese Ausführungsform mit einer vorgenannten Ausführungsform des Dokuments mit Prozessor kombiniert werden.

Nach einer Ausführungsform der Erfindung handelt es sich bei der Ausgabeeinheit um ein elektrochromes Symbol, welches durch das Spannungssignal der ersten Antenne ein- und durch das Spannungssignal der zweiten Antenne ausgeschaltet wird. Alternativ oder zusätzlich kann die Ausgabeeinheit ein oder mehrere verschiedenfarbige LEDs aufweisen.

Ausführungsformen der Erfindung sind besonders vorteilhaft, da auf diese Art und Weise ein elektro-optisches Sicherheitsmerkmal geschaffen wird.

Nach einer Ausführungsform der Erfindung wird dieses elektro-optische Sicherheitsmerkmal ergänzend zu weiteren optischen Sicherheitsmerkmalen auf einem Dokument, z.B. einer Banknote, aufgebracht oder auf ein anderes Zahlungsmittel, wie zum Beispiel eine Kreditkarte. Durch Schwenken des Dokuments, das heißt zum Beispiel der Banknote oder der Kreditkarte, über einem Lesegerät, wie zum Beispiel einem Paypass-Terminal an einer Kasse, kann das elektrochrome Symbol ein- und ausgeschaltet werden. Dies kann somit zur Echtheitsprüfung des Wert-oder Sicherheitsdokuments genutzt werden.

Nach einer weiteren Ausführungsform der Erfindung handelt es sich bei der Ausgabeeinheit um einen akustischen Signalgeber, welcher aufgrund des Spannungssignals der ersten Antenne einen ersten Ton und aufgrund des Spannungssignals der zweiten Antenne einen zweiten Ton erzeugt. Dies ist besonders vorteilhaft, da hierdurch ein weiteres Sicherheitsmerkmal für ein Wert- oder Sicherheitsdokument geschaffen wird.

In einem weiteren Aspekt betrifft die Erfindung ein Verfahren zur Prüfung eines solchen Sicherheitsmerkmals.

Im Weiteren werden Ausführungsformen der Erfindung mit Bezugnahme auf die Zeichnungen näher erläutert. Es zeigen:
- Figur 1: eine Draufsicht auf eine Ausführungsform eines erfindungsgemäßen Dokuments,
- Figur 2: eine Draufsicht auf eine weitere Ausführungsform eines erfindungsgemäßen Dokuments,
- Figur 3: eine Draufsicht auf eine weitere Ausführungsform eines erfindungsgemäßen Dokuments,
- Figur 4: eine Draufsicht auf eine Ausführungsform eines erfindungsgemäßen Dokuments mit einem Antennenpaar,
- Figur 5: eine Draufsicht auf eine Ausführungsform eines erfindungsgemäßen Dokuments mit einem Zusatz-Antennenpaar,
- Figur 6: eine Draufsicht auf eine Ausführungsform eines erfindungsgemäßen Dokuments mit einer einzigen Zusatzantenne,
- Figur 7: eine Draufsicht einer Ausführungsform eines erfindungsgemäßen Dokuments mit je einem Antennenpaar für die X- und die Y-Richtung,
- Figur 8: eine Draufsicht einer Ausführungsform eines erfindungsgemäßen Dokuments mit je einer Antenne für die X- und die Y-Richtung,
- Figur 9: eine Draufsicht einer Ausführungsform eines erfindungsgemäßen Dokuments als Weiterbildung der Figur 7, wobei die Antennenpaare jeweils als Zusatz-Antennenpaare ausgebildet sind,
- Figur 10: eine Draufsicht einer weiteren Ausführungsform eines erfindungsgemäßen Dokuments, wobei als Weiterbildung zu der Figur 8 die Antennen als Zusatzantennen ausgebildet sind,
- Figur 11: ein Blockdiagramm einer Ausführungsform eines erfindungsgemäßen elektronischen Systems,
- Figur 12: ein Blockdiagramm einer weiteren Ausführungsform eines erfindungsgemäßen Systems, wobei das Dokument eine Anzeigevorrichtung aufweist,
- Figur 13: ein Blockdiagramm einer weiteren Ausführungsform eines erfindungsgemäßen Systems,
- Figur 14: eine Draufsicht einer Ausführungsform eines erfindungsgemäßen Dokuments mit einem elektro-optischen Sicherheitsmerkmal
- Figur 15: eine Draufsicht auf eine weitere Ausführungsform eines erfindungsgemäßen Dokuments mit einer Batterie,
- Figur 16: eine Draufsicht auf eine weitere Ausführungsform eines erfindungsgemäßen Dokuments mit einer Batterie,
- Figur 17: ein Blockdiagramm einer weiteren Ausführungsform eines erfindungsgemäßen elektronischen Systems,
- Figur 18: ein Blockdiagramm einer weiteren Ausführungsform eines erfindungsgemäßen elektronischen Systems mit einem Lesegerät, welches mehrere Antennen aufweist,
- Figur 19: ein Blockdiagramm einer weiteren Ausführungsform eines erfindungsgemäßen elektronischen Systems mit einem Adapter für das Lesegerät.

Im Weiteren werden einander entsprechende Elemente der nachfolgenden Ausführungsformen mit identischen Bezugszeichen gekennzeichnet.

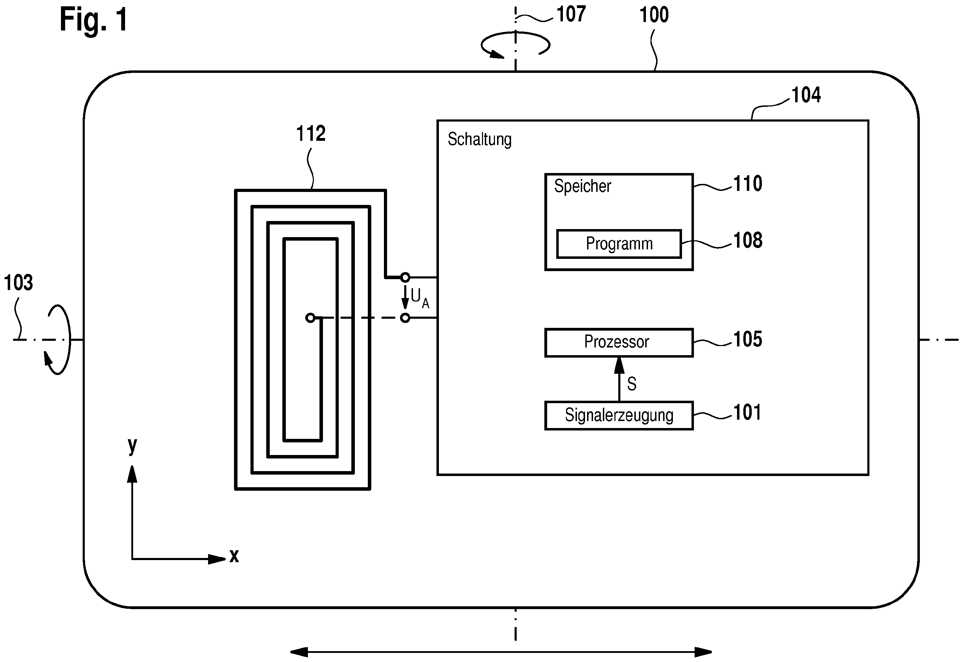

Die Figur 1 zeigt ein Dokument 100, welches kartenförmig ausgebildet ist. Bei dem Dokument 100 handelt es sich um ein Wert- oder Sicherheitsdokument, wie zum Beispiel ein ID-Dokument oder ein Zahlungsmittel, wie zum Beispiel eine Kreditkarte.

Das Dokument 100 hat bei der hier betrachteten Ausführungsform eine einzige Antenne 112, welche mehrere Windungen aufweist, die nebeneinander in einer Ebene des Dokuments 100 angeordnet sind. Beispielsweise hat das Dokument 100 einen mehrschichtigen Aufbau, wobei die einzelnen Schichten aufeinander laminiert sind. Auf eine dieser Schichten ist die Antenne 112 aufgebracht, beispielsweise indem diese mit einer Silberleitpaste oder einer leitfähigen Tinte auf die betreffende Schicht aufgedruckt wird, bevor die darüber liegende Schicht auflaminiert wird.

Wenn das Dokument 100 mit der Antenne 112 in ein elektrisches Wechselfeld eingebracht wird, so wird in die Antenne 112 eine elektrische Spannung U_{A} induziert, welche zwischen den Enden der Antenne 112 abgegeben wird. Diese Antennenspannung U_{A} dient hier als Betriebsspannung für eine an die Antenne 112 angeschlossene Schaltung 104. Die Schaltung 104 kann als Chip ausgebildet sein, welcher in Form eines sogenannten Moduls in einer Kavität des Dokuments 100 angeordnet ist.

Vorzugsweise ist die Schaltung 104 insbesondere als Chip, beispielsweise Halberleiterchip, ausgebildet, oder beinhaltet einen oder mehrere Chips. Bei dem Chip kann es sich um einen Speicherchip zur Speicherung von Daten und/oder einem Controller zur Kommunikation mit einem externen Lesegerät handeln. Die Einkopplung der Energie zur Energieversorgung der Schaltung 104 erfolgt über die Antenne 112.

Die Kommunikation mit dem externen Lesegerät kann beispielsweise nach einem RFID- oder NFC-Verfahren über dieselbe Antenne 112 erfolgen. Unter einem Chip wird auch eine integrierte elektronische Schaltung verstanden, die ganz oder teilweise drucktechnisch aufgebracht ist, wie z.B. mittels leitfähiger Tinte, insbesondere eine polymerelektronische Schaltung.

Nach Ausführungsformen der Erfindung handelt es sich bei dem Chip um eine gedünnte integrierte Schaltung. Unter einer gedünnten integrierten Schaltung wird eine integrierte Schaltung verstanden, welche eine Dicke von höchstens 200 µm, bevorzugt von höchstens 100 µm, weiter bevorzugt von höchstens 80 µm, weiter bevorzugt von höchstens 60 µm, weiter bevorzugt von höchstens 50 µm, weiter bevorzugt von höchstens 30 µm und am meisten bevorzugt von höchstens 10 µm aufweist.

Nach Ausführungsformen der Erfindung ist die Schaltung 104 ungehaust. Dadurch wird eine besonders kompakte Anordnung in dem Laminat des Dokuments erreicht, sodass das Wert- oder Sicherheitsdokument eine besonders geringe Bauhöhe aufweisen kann. Ferner ist dadurch eine gute Einbindung des integrierten Schaltkreises in das Dokument möglich, sodass dieser ein integraler Bestandteil des Dokuments ist. Ein weiterer Vorteil ist die Flexibilität der integrierten Schaltung. Die Schaltung 104 kann durch ein ultradünnes Electronic Inlay in einem mehrschichtigen Dokument 100 realisiert sein.

Die Schaltung 104 beinhaltet einen elektronischen Speicher 110 zur Speicherung von Programminstruktionen 108, durch die ein ausführbares Programm gebildet wird. Die Schaltung 104 hat fernen einen Prozessor 105, welcher zur Ausführung der Programminstruktionen 108 dient. Ferner beinhaltet die Schaltung 104 einen Signalerzeuger 101.

Der Signalerzeuger 101 dient zur Erzeugung eines Eingabesignals zur Eingabe in das von den Programminstruktionen 108 gebildete Programm, wenn dieses durch den Prozessor 105 ausgeführt wird. Der Signalerzeuger 101 wertet hierzu die am Eingang der Schaltung 104 anliegende Antennenspannung U_{A} aus.

Wenn der zeitliche Verlauf der Antennenspannung U_{A} beispielsweise einem bestimmten vorgegebenen Muster hinreichend entspricht, so erzeugt der Signalerzeuger 101 daraufhin ein diesem Muster zugeordnetes Eingabesignal S, welches der Signalerzeuger 101 in das Programm eingibt. Das Programm kann diese Eingabe dann weiterverarbeiten, indem beispielsweise eine bestimmte, dieser Eingabe zugeordnete, Aktion ausgelöst oder freigegeben wird.

Da der zeitliche Verlauf der Antennenspannung U_{A} von der lokalen Feldstärke und Richtung des elektrischen Feldes relativ zu der Antenne 112 am Ort der Antenne 112 abhängt, ist auch die resultierende Antennenspannung U_{A} von dieser lokalen Feldstärke abhängig, das heißt von dem absoluten Betrag dieser Feldstärke als auch von der Richtung der Feldstärke, da im Wesentlichen nur die senkrecht auf der Antenne 112 stehende Richtungskomponente des elektrischen Feldes zu der Erzeugung der Antennenspannung U_{A} beiträgt.
Wird das Dokument 100 beispielsweise in dem elektrischen Feld durch eine rotatorische Kippbewegung zum Beispiel um eine Längsachse 103 des Dokuments 100 um einige Grad gekippt, so ändert sich der Winkel zwischen dem elektrischen Feld und der Flächennormalen der Fläche, innerhalb derer die Antenne 112 in dem Dokument 100 eingeordnet ist, was zu einer entsprechenden Änderung der Antennenspannung U_{A} führt. Auch eine Kippbewegung um eine Querachse 107 des Dokuments 100 führt in analoger Art und Weise zu einer Änderung der Antennenspannung U_{A}.

Wenn das Dokument 100 translatorisch in dem elektrischen Feld zum Beispiel in Längsrichtung, das heißt X-Richtung des Dokuments 100, bewegt wird, wie in der Figur 1 dargestellt, so führt dies ebenfalls zu einer Änderung der Antennenspannung U_{A}, da sich das elektrische Feld, welches durch die Antenne 112 hindurchtritt, aufgrund dieser Bewegung nach Betrag und/oder Richtung aufgrund der Bewegung des Dokuments 100 ändert; entsprechend verhält es sich für eine Bewegung des Dokuments 100 in Quer-, das heißt Y-Richtung des Dokuments 100.

Der Signalerzeuger 101 kann durch eine von dem Prozessor 105 separate Logikschaltung, insbesondere als ein weiterer Prozessor, realisiert sein. An einem Eingang des Signalerzeugers 101 liegt die Antennenspannung U_{A} an, damit diese durch den Signalerzeuger 101 sensiert und ausgewertet werden kann. Die Auswertung der sensierten Antennenspannung U_{A} durch den Signalerzeuger 101 kann durch Ausführung eines weiteren Programms erfolgen, da diese Auswertung eine mehr oder weniger komplexe Mustererkennung zur Erkennung einer von dem Benutzer mit dem Dokument innerhalb des elektrischen Feldes ausgeführten Geste beinhalten kann.

Der Signalerzeuger 101 kann auch so ausgebildet sein, dass dieser lediglich den Wert der Antennenspannung U_{A} erfasst und in den Prozessor 105 eingibt, welcher ein Programmmodul für die Mustererkennung, das heißt zur Erkennung einer von dem Benutzer mit dem Dokument 100 ausgeführten Geste, ausführt, um das Eingabesignal für das Programm zu erzeugen.

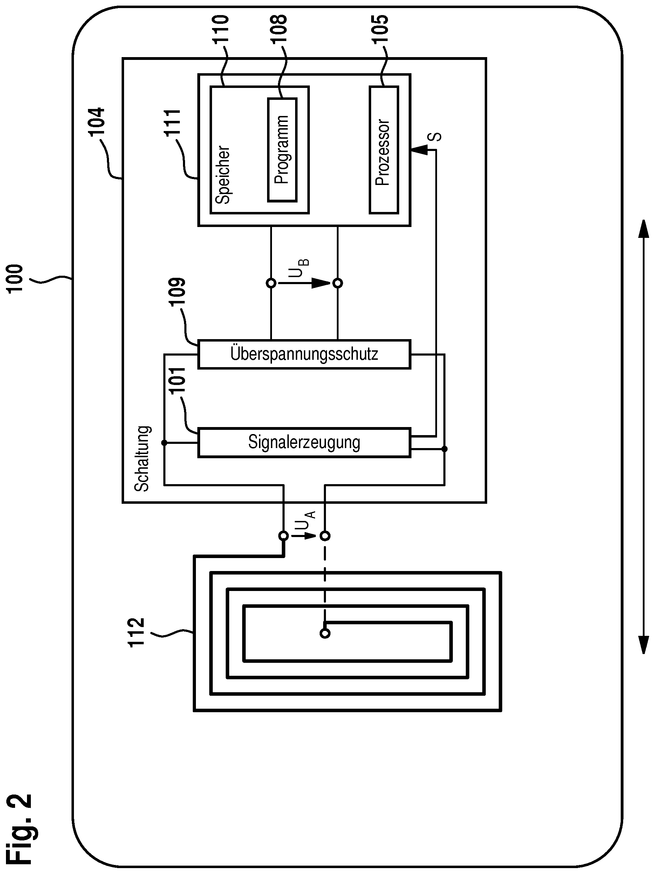

Die Figur 2 zeigt eine Ausführungsform des Dokuments 100 mit einem Überspannungsschutz 109. Die Schaltung 104 beinhaltet hier eine Schaltungskomponente 111, die den Speicher 110 und den Prozessor 105 beinhaltet. Diese Schaltungskomponente benötigt eine Betriebsspannung U_{B}. Die Antennenspannung U_{A} liegt an dem Überspannungsschutz 109 an, welcher die Betriebsspannung U_{B} für die Schaltungskomponente 111 liefert.

Bei dem Überspannungsschutz 109 handelt es sich um eine Schaltung, die an der Schaltungskomponente 111 anliegende Spannung auf ein Maximum begrenzen soll, um eine Zerstörung der Schaltungskomponente 111 durch eine zu hohe Spannung zu vermeiden. Hierzu kann der Überspannungsschutz 109 eine Zenerdiode beinhalten, wobei eine Durchbruchspannung der Zenerdiode dann erreicht wird, wenn eine maximale Spannung für die Schaltungskomponente 111 erreicht wird. Aufgrund des Erreichens der Durchbruchspannung der Zenerdiode steigt dann die sekundärseitige Last, welche durch das Dokument 100 gebildet wird, stark an.

Der Signalerzeuger 101 ist bei der hier betrachteten Ausführungsform parallel zu dem Überspannungsschutz 109 geschaltet, sodass an dem Signalerzeuger ebenfalls die Antennenspannung U_{A} anliegt. Der Signalerzeuger 101 kann so ausgebildet sein, dass er den Wert der Antennenspannung U_{A} erfasst und in Form des Signals S in die Schaltungskomponente 111 eingibt. Von dem Prozessor 105 wird daraufhin ein Programmmodul ausgeführt, um zum Zweck der Gestenerkennung ein bestimmtes Muster in dem Signal S zu erkennen und in Abhängigkeit von der erkannten Geste ein Eingabesignal für das Programm zu erzeugen. Alternativ können diese Mustererkennung und die Erzeugung des Eingabesignals auch bereits in dem Signalerzeuger 101 stattfinden, sodass es sich in diesem Fall bei dem Signal S bereits um das Eingabesignal selbst handelt.

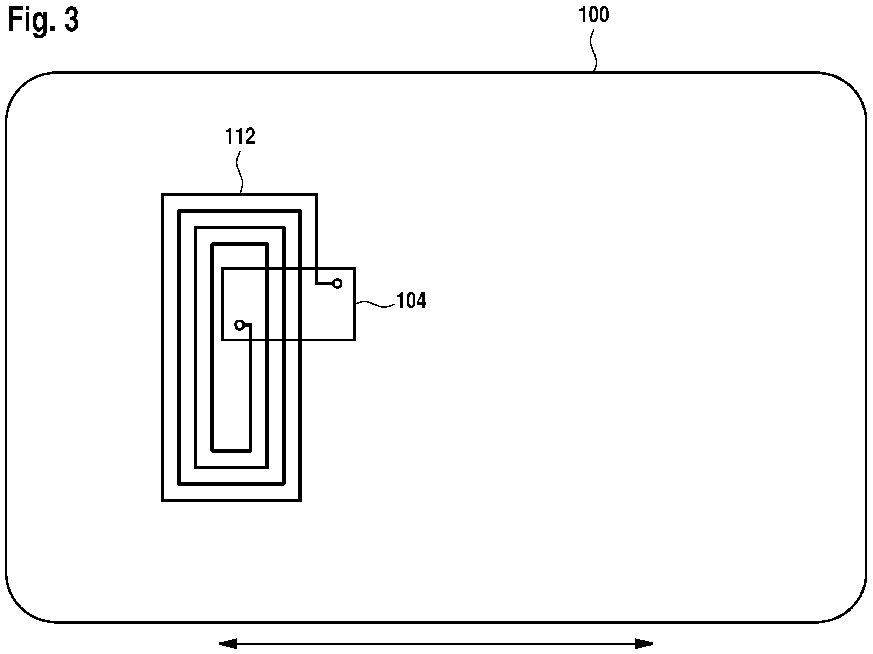

Die Figur 3 zeigt eine Ausführungsform, bei der die Schaltung 104 die Windungen der Antenne 112 überbrückt. Diese Ausführungsform hat den Vorteil, dass zur Kontaktierung der Enden der Antenne 112 mit der Schaltung 104 keine Vias oder dergleichen erforderlich sind, sodass diese Ausführungsform besonders kostengünstig herstellbar ist und besonders vorteilhafte mechanische Eigenschaften aufweist.

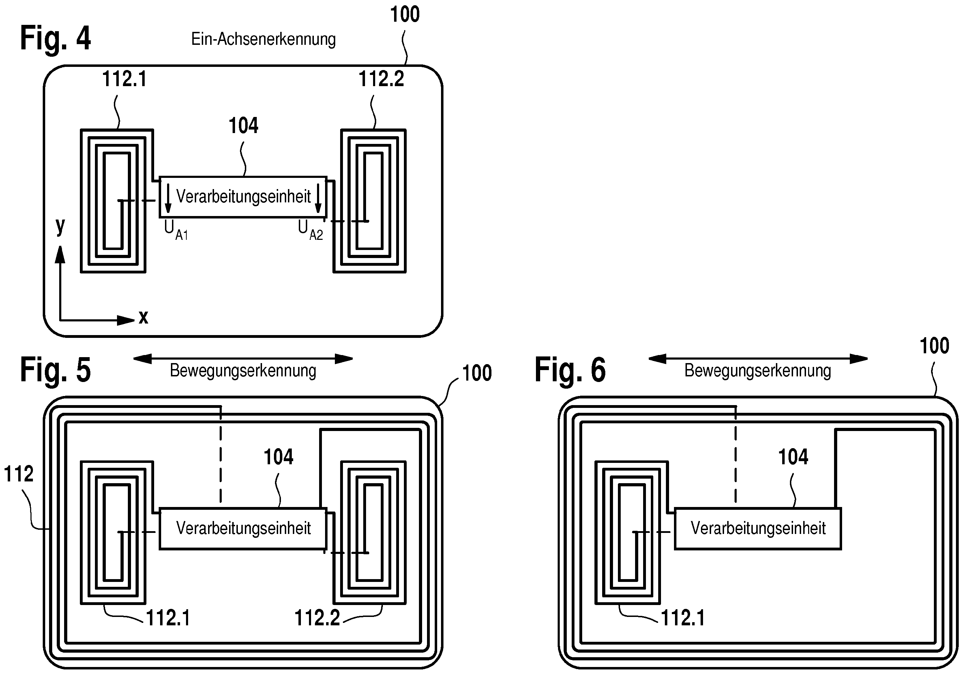

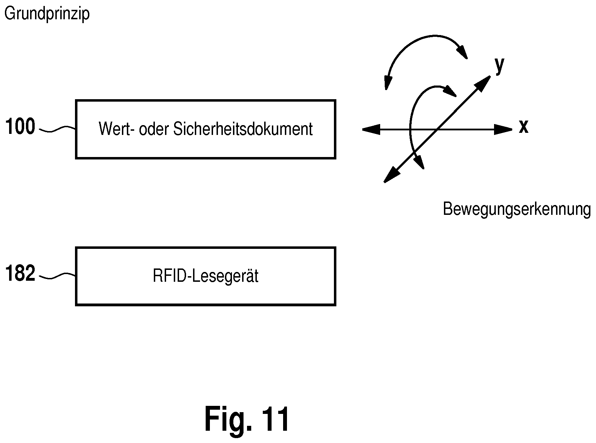

Die Figur 4 zeigt eine Ausführungsform des Dokuments 100 mit zwei Antennen 112.1 und 112.2, welche ein Antennenpaar bilden. Die Antennen 112.1 und 112.2 sind in X-Richtung versetzt nebeneinander angeordnet und jeweils mit ihren Enden an der Schaltung 104 angeschlossen. Bewegt man nun das Dokument 100 von links nach rechts, das heißt in X-Richtung, über ein Lesegerät (vgl. Lesegerät 182 der Figuren 11, 12 und 13), so wird zunächst eine Antennenspannung U_{A2} in die rechte Antenne 112.2 induziert, welche als Betriebsspannung für die Schaltung 104 verwendet wird, während keine oder eine geringe Spannung U_{A1} in die rechte Antenne 112.1 induziert wird, welche dementsprechend nur einen geringen Beitrag zur Spannungsversorgung der Schaltung 104 leistet.

Die Differenz der Spannungen U_{A2} und U_{A1} ist dabei repräsentativ für die Position des Dokuments 100 in X-Richtung relativ zu dem Lesegerät 182. Diese Differenzspannung kann von dem Signalerzeuger 101 (vgl. Ausführungsform der Figuren 1 und 2) ausgewertet werden, um daraus das Eingabesignal S abzuleiten. Wird das Dokument 100 in X-Richtung, das heißt von links nach rechts weiterbewegt, so steigt dadurch die Spannung U_{A1} an, während die Spannung U_{A2} abfällt, was zu einer entsprechenden Änderung des Eingabesignals führt, beispielsweise um einen Cursor auf einem Display des Dokuments entsprechend von links nach rechts zu verschieben.

Die Figur 5 zeigt eine Ausführungsform, bei der die Antennen 112.1 und 112.2 lediglich zur Sensierung der Position oder der Bewegung des Dokuments 100 in dem elektrischen Feld dienen, wohingegen die im Randbereich des Dokuments 100 verlaufende Antenne 112, welche beispielsweise gemäß ISO 14443 ausgebildet sein kann, lediglich für die Energieversorgung und die RFID- oder NFC-Kommunikation vorgesehen sein kann.

Die Figur 6 zeigt eine Ausführungsform mit lediglich einer Zusatzantenne 112.1, wobei im Vergleich zu der Ausführungsform gemäß Figur 5 die Zusatzantenne 112.2 entfallen ist. Dies ist möglich, da auch die Antenne 112.1 alleine eine Antennenspannung liefert, welche von der X-Position des Dokuments 100 abhängig ist.

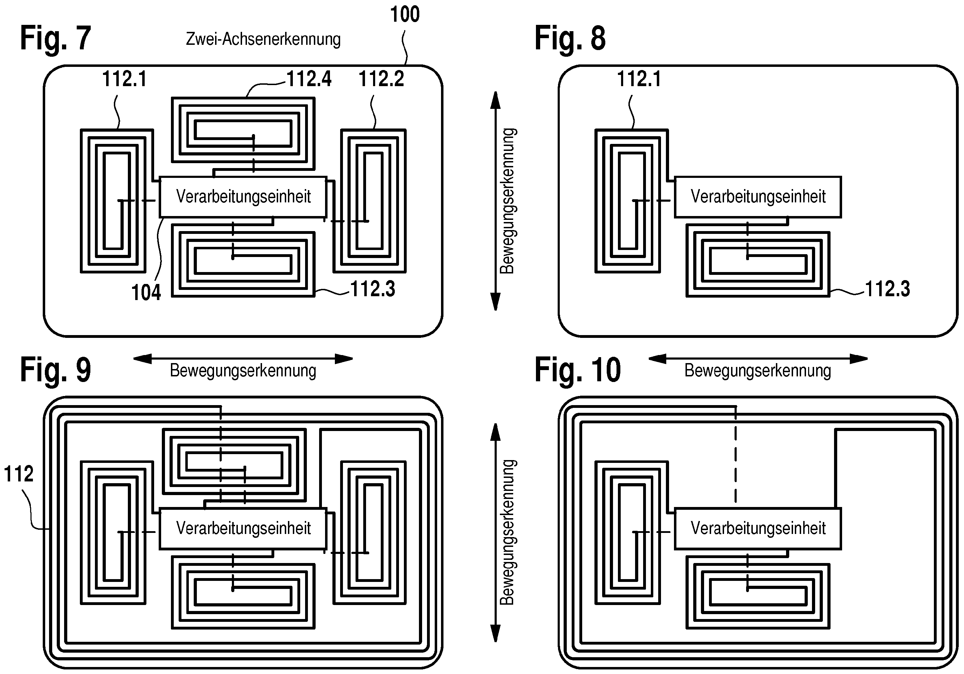

Die Figur 7 zeigt eine Ausführungsform, bei der in Ergänzung der Ausführungsform gemäß Figur 4 ein weiteres Antennenpaar 112.3 und 112.4 vorgesehen ist, um analog zu der Ausführungsform gemäß Figur 4 auch die Y-Position oder eine Bewegung in Y-Richtung des Dokuments 100 zu sensieren.

Die Figur 8 zeigt eine Ausführungsform, bei der jeweils nur eine Antenne 112.1 bzw. 112.3 für die X- bzw. die Y-Richtung vorgesehen ist.

Bei der Ausführungsform gemäß Figur 9 ist ergänzend zu der Ausführungsform gemäß Figur 7 die Antenne 112 im Randbereich des Dokuments 100 für die Energieversorgung und die RFID- oder NFC-Kommunikation vorgesehen, wohingegen die weiteren Antennen 112.1 bis 112.4 als Zusatzantennen für die Zwecke der Positions- oder Bewegungserkennung des Dokuments 100 in dem elektrischen Feld vorgesehen sind.

Bei der Ausführungsform gemäß Figur 10 sind im Vergleich zu der Ausführungsform gemäß Figur 9 jeweils nur eine Zusatzantenne 112.1 und 112.3 für die X- bzw. die Y-Richtung vorgesehen.

Bei den vorstehenden Ausführungsformen ist es besonders vorteilhaft, dass sämtliche der genannten Antennen in derselben Ebene des Dokuments 100 realisierbar sind, beispielsweise durch Aufdrucken.

Die Figur 11 zeigt eine Ausführungsform eines elektronischen Systems mit einem Lesegerät 182, beispielsweise einem RFID-Lesegerät, und einem erfindungsgemäßen Wert- oder Sicherheitsdokument 100. Das Lesegerät 182 erzeugt ein mehr oder weniger inhomogenes elektrisches Wechselfeld, sodass sich am Ort des Dokuments 100 bzw. von dessen Antennen oder Zusatz-Antennen jeweils eine bestimmte Feldstärke einer bestimmten Richtung einstellt. Durch eine translatorische Bewegung in X- oder Y-Richtung sowie einer Kippbewegung um die Längsachse 103 oder die Querachse 107 (vgl. Figur 1) können diese lokalen Feldstärken bzw. die in Richtung der Flächennormalen der betreffenden Antennen verlaufenden Richtungskomponenten dieser Feldstärke variiert werden.

Wird also das Dokument 100 von einem Benutzer innerhalb des elektrischen Feldes bewegt, um beispielsweise mit dem Dokument 100 eine bestimmte Geste auszuführen, indem der Benutzer das Dokument 100 entsprechend dieser Geste in dem Feld bewegt, so führt dies zu entsprechenden Spannungsverläufen der Antennenspannungen. Aufgrund dieser Spannungsverläufe kann eine Mustererkennung erfolgen, um bei hinreichender Übereinstimmung mit einem vorgegebenen Muster dieses als eine bestimmte Geste zu erkennen, der ein bestimmtes Eingabesignal zugeordnet ist.

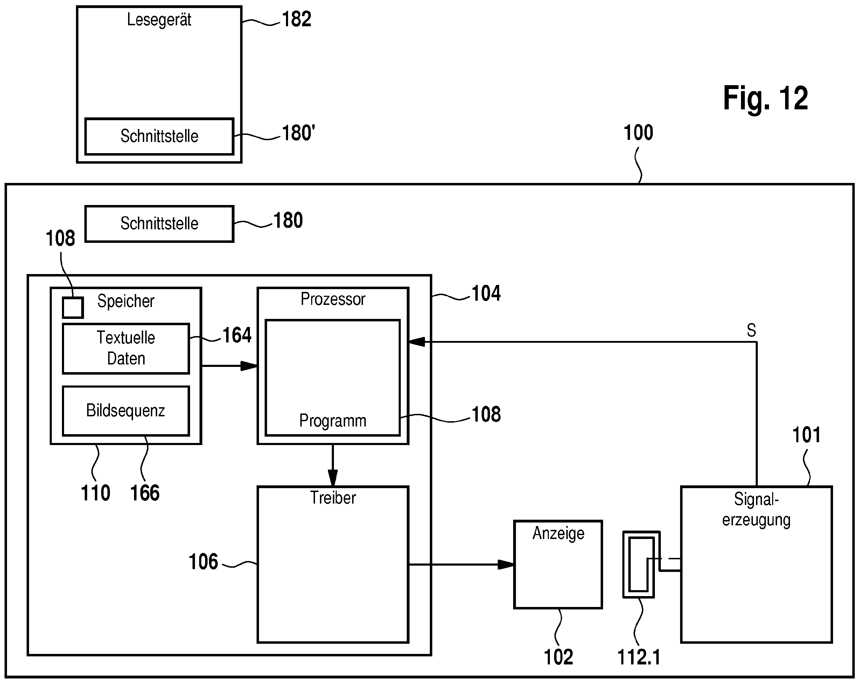

Die Figur 12 zeigt eine Ausführungsform eines erfindungsgemäßen elektronischen Systems mit einer Ausführungsform eines erfindungsgemäßen Dokuments 100 und einem Lesegerät 182. Bei der hier betrachteten Ausführungsform hat das Dokument 100 eine in seinem Dokumentenkörper integrierte Anzeigevorrichtung 102. Die Anzeigevorrichtung 102 kann unbeleuchtet, hinterleuchtet, frontbeleuchtet oder selbstleuchtend ausgebildet sein. Beispielsweise handelt es sich bei der Anzeigevorrichtung 102 um eine bistabile Anzeigevorrichtung, bei der eine Anzeige permanent ohne Energiezufuhr wiedergegeben werden kann. Wenn beispielsweise das Dokument 100 nicht mit Energie versorgt ist oder deaktiviert ist, so kann auf der bistabil ausgebildeten Anzeigevorrichtung 102 beispielsweise das Gesichtsbild des Benutzers in einer bestimmten Ansicht angezeigt werden. Durch den Signalerzeuger 101 wird bei der hier betrachteten Ausführungsform das Signal S ausgegeben (vgl. Fig. 1 und Fig. 2); das Signal S kann einen Spannungswert der Antenne 112.1 darstellen oder eine bereits erkannte Geste.

Die Schaltung 104 ist zur Ansteuerung der Anzeigevorrichtung 102 ausgebildet, sodass auf der Anzeigevorrichtung 102 eine bestimmte Anzeige erzeugt wird. Ferner ist die Schaltung 104 dazu ausgebildet, das Signal S von dem Signalerzeuger 101 zu empfangen.

Das Signal S wird von der elektronischen Schaltung 104 verarbeitet. Als Ergebnis der Verarbeitung des Signals S durch die Schaltung 104 kann zum Beispiel die Position eines auf der Anzeigevorrichtung 102 angezeigten Cursors verändert werden, ein Bild oder eine Bildelement zur Anzeige auf der Anzeigevorrichtung 102 ausgewählt werden oder eine andere Aktion ausgelöst werden.

Die Schaltung 104 beinhaltet bei dieser Ausführungsform einen elektronischen Speicher 110, in dem beispielsweise textuelle Daten 165 und/oder Bilddaten 166 gespeichert sind. Bei den textuellen Daten 164 kann es sich zum Beispiel um Angaben zu dem Inhaber des Dokuments 100, d.h. zum Beispiel dem Inhaber des Ausweisdokuments, und/oder bezüglich der Behörde, die das Dokument ausgestellt hat, handeln. Die Bilddaten 166 können beispielsweise ein oder mehrere digitale Gesichtsbilder des Inhabers, einen zweidimensionalen Barcode, ein Symbol oder andere Daten beinhalten, die als Bild auf der Anzeigevorrichtung 102 angezeigt werden können.

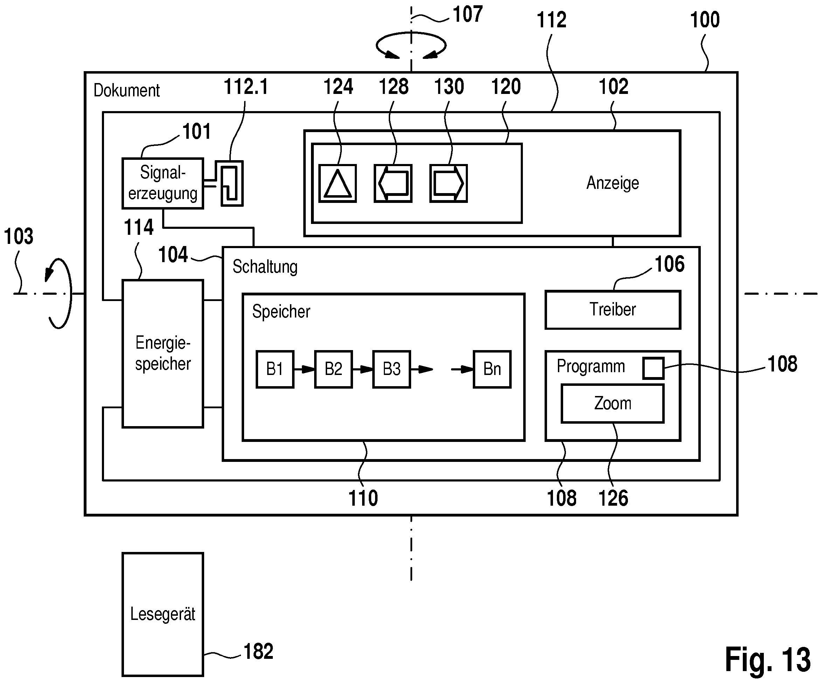

Beispielsweise beinhalten die Bilddaten 166 eine Bildsequenz bestehend aus den Bildern B1 - Bn, wobei für jedes der Bilder ein entsprechender Bilddatensatz in dem elektronischen Speicher 110 gespeichert ist (vgl. die Ausführungsform gemäß Figur 13).

Die elektronische Schaltung 104 beinhaltet einen Prozessor 105 zur Ausführung von Programminstruktionen 108. Die elektronische Schaltung 104 beinhaltet ferner einen Treiber 106, über den der Prozessor 105 die Anzeigevorrichtung 102 zur Wiedergabe von in dem Speicher 110 gespeicherten Daten ansteuern kann. In Abhängigkeit von einem Ergebnis der Auswertung des Signals S wird die Anzeigevorrichtung 102 mit Hilfe des Treibers 106 zur Erzeugung einer bestimmten Anzeige angesteuert.

Beispielsweise kann aufgrund des Signals S eine Auswahl von in dem Speicher 110 gespeicherten Daten zur Wiedergabe auf der Anzeigevorrichtung 102 erfolgen. Insbesondere können die Programminstruktionen 108 eine grafische Benutzeroberfläche generieren, die einen sogenannten Cursor beinhaltet, also einen Zeiger, mit dem zum Beispiel bestimmte, auf der Anzeigevorrichtung angezeigte Bildelemente, insbesondere Icons, ausgewählt werden können. Die Soll-Position dieses Cursors wird z.B. durch die Stellung des Dokuments relativ zu dem Feld bestimmt und über das Signal S von dem Signalerzeuger 101 an die Programminstruktionen 108 kommuniziert, sodass diese die Anzeigeposition des Cursors dem Signal S nachführen können.

Bei der hier betrachteten Ausführungsform hat das Dokument 100 keine eigene Energieversorgung, insbesondere keine Primärbatterie. Die Energieversorgung erfolgt hingegen über eine Schnittstelle 180 des Dokuments 100 von einem externen Lesegerät 182, welches über eine entsprechende Schnittstelle 180' verfügt. Beispielsweise kann es sich bei den Schnittstellen 180, 180' um Schnittstellen nach einem RFID- oder NFC-Standard handeln. In diesem Fall erfolgt die Einkopplung von Energie in das Dokument 100 induktiv, nämlich z.B. über die Antenne 112 (vgl. z.B. Fig. 1).

Die elektronische Schaltung 104 mit ihren verschiedenen Schaltungskomponenten, der Signalerzeuger 101, die Anzeigevorrichtung 102 und/oder die Schnittstelle 180 können als separate elektrisch wirksame Elemente, beispielsweise als diskrete Bauelemente, realisiert sein oder sie können ganz oder teilweise als eine einzige integrierte oder gedruckte Schaltung realisiert sein.

Die Figur 13 zeigt eine weitere Ausführungsform eines erfindungsgemäßen Dokuments 100. Die in dem Speicher 110 gespeicherte Bildsequenz beinhaltet zumindest einen ersten Bilddatensatz B1 zur Wiedergabe eines ersten Bildes des Inhabers des Dokuments 100, wie zum Beispiel eines Gesichtsbildes in frontaler Ansicht. Ferner beinhaltet die Bildsequenz zumindest einen zweiten Bilddatensatz B2 zur Wiedergabe eines zweiten Bildes des Inhabers, wie zum Beispiel eines Gesichtsbildes in seitlicher Ansicht.

Wenn beispielsweise über die Antenne 112 Energie in das Dokument 100 eingekoppelt wird, so wird die Ausführung der Programminstruktionen 108 automatisch gestartet. Die Programminstruktionen 108 steuern dann den Treiber 106 an, sodass die Bilddatensätze B1 und B2 in dieser Reihenfolge nacheinander über die Anzeigevorrichtung 102 wiedergegeben werden. Beispielsweise erfolgt die Wiedergabe jedes der Bilder der Bildsequenz für einen vorgegebenen Zeitraum von zum Beispiel 0,5 bis 2 Sekunden bevor zum nächsten Bild der Bildsequenz gewechselt wird. Die Wiedergabe der Bildsequenz kann so lange wiederholend durchgeführt werden, als Energie in die Antenne 112 eingekoppelt wird. Die Zeitdauer der Wiedergabe eines jeden Bildes der Bildsequenz kann fest vorgegeben sein oder vom Benutzer durch eine mit dem Dokument in dem Feld des Lesegeräts 182 beschriebene Geste wählbar sein.

Die Bildsequenz kann über das Gesichtsbild in frontaler und seitlicher Ansicht hinaus weitere Bilder beinhalten. Beispielsweise wird das Gesicht des Inhabers aus mehreren verschiedenen Ansichten aufgenommen, wobei von einer Ansicht zur nächsten der Aufinahmewinkel variiert wird. Die sich daraus ergebenden sequenziellen Bilddatensätze können in Form einer Filmsequenz über die Anzeigevorrichtung 102 ausgegeben werden. Da der Aufnahmewinkel von einem Bilddatensatz zum nächsten variiert, ermöglicht dies eine rasche Verifikation des Dokuments 100 mit einer hohen Erkennungswahrscheinlichkeit.

Neben der bildlichen Darstellung einer Person oder von Personen können die Bilddatensätze biometrische Merkmale, wie zum Beispiel einzelne Fingerabdrücke, oder sämtliche Fingerabdrücke des Inhabers, einer Iris-Abbildung oder einer Unterschrift des Inhabers, beinhalten. Ferner kann die in dem elektronischen Speicher 110 gespeicherte Sequenz auch einen oder mehrere Bilddatensätze mit visuell im Klartext erfassbaren Informationen und/oder nur maschinell erfassbaren Informationen beinhalten.

Hierbei kann es sich zum Beispiel um eine Angabe in Klartext handeln, wie zum Beispiel den Namen, die Adresse und das Geburtsdatum des Inhabers des Dokuments 100, Visum-Informationen, Transaktions- und Statusinformationen, Einmalpasswort, und/oder um nur ein maschinell erfassbares Signal, wie zum Beispiel einen Bar-Code, insbesondere einen 2D-Bar-Code.

Das Dokument 100 kann einen Energiespeicher 114 aufweisen, der zur Pufferung zwischen die Antenne 112 und die Schaltung 104 geschaltet ist. Bei dem Energiespeicher 114 kann es sich zum Beispiel um einen Kondensator oder eine wiederaufladbare Batterie handeln.

Das Dokument 100 kann eine graphische Nutzerschnittstelle 120 mit ein oder mehreren virtuellen Bedienelementen, insbesondere Icons, aufweisen. Die Nutzer-Schnittstelle 120 kann z.B. ein virtuelles Bedienelement 124, d.h. einen Icon, mit einer Zoomfunktion beinhalten. Durch Auswahl des Bedienelements 124 kann ein Benutzer des Dokuments das gerade auf der Anzeigevorrichtung 102 wiedergegebene Bild vergrößern.

Hierzu haben die Programminstruktionen 108 entsprechende Programminstruktionen 126 zur Realisierung der Zoomfunktion. Alternativ oder zusätzlich kann zumindest einer der Bilddatensätze der Bildsequenz eine vergrößerte Detailansicht eines der anderen Bilder der Bildsequenz beinhalten.

Die Nutzerschnittstelle 120 kann ferner virtuelle Bedienelemente 128 und 130 für eine Navigation des Benutzers in der Bildsequenz beinhalten. Durch Bewegen des Dokuments 100, z.B. durch Kippen nach links oder rechts, kann der Benutzer ein bestimmtes Bild innerhalb der Bildsequenz auswählen, sodass dieses gewünschte Bild auf der Anzeigevorrichtung 102 wiedergegeben wird.

Nach einer Ausführungsform der Erfindung werden die in der Figur 9 gezeigt Icons, die die virtuellen Bedienelemente 124, 128 und 130 repräsentieren, auf der Anzeigevorrichtung 102 angezeigt sowie auch ein Cursor, den der Nutzer durch Bewegung des Dokuments 100 z.B. durch Kippen nach links oder rechts, d.h. um die Querachse 107, an eine gewünschte Anzeigeposition bringen kann, um so eines der Icons zu selektieren. Nachdem der Nutzer mit dem Cursor eines der Icons selektiert hat, kann er diese Selektion durch eine weitere Bewegung des Dokuments 100 bestätigen, z.B. durch Kippen des Dokuments nach vorne oder hinten, d.h. um die Längsachse 103, sodass die durch den betreffenden Icon repräsentierte Funktion ausgelöst wird.

Die Navigation entlang der Bildsequenz kann auch so erfolgen, dass jeder Antennenspannung oder Änderung der Antennenspannung der Antenne 112.1 ein bestimmtes Bild der Bildsequenz zugeordnet ist. Zur Auswahl eines der Bilder für die Anzeige auf der Anzeigevorrichtung 102 muss der Benutzer dann lediglich das Dokument relativ zu dem Lesegerät 182 in eine bestimmte Position bringen, sodass das dieser Position zugeordnete Bild der Bildsequenz angezeigt wird. Bewegt der Benutzer anschließend das Dokument z.B. entlang der X-Achse nach links oder rechts, so werden die den verschiedenen X-Positionen des Dokuments entsprechenden Bilder der Bildsequenz angezeigt. Diese Funktionalität kann alternativ oder zusätzlich zu der Navigation mit Hilfe der Bedienelemente 124, 128 und 130 gegeben sein.

Je nach Ausführungsform kann der Benutzer also durch Bewegung des Dokuments 100 in dem Feld des Lesegerätes 182 eines der virtuellen Bedienelemente 124, 128 oder 130 auswählen, um entlang der Bildsequenz zu navigieren. Beispielsweise kann dies so erfolgen, dass der Benutzer das Dokument 100 zunächst in X-Richtung bewegt, sodass je nach der Position des Dokuments 100 in X-Richtung eines der Bedienelemente 124, 128 oder 130 selektiert wird, indem der Cursor auf das betreffende Bedienelement positioniert wird. Zur Bestätigung dieser Selektion kann der Benutzer beispielsweise das Dokument 100 dann nach vorne oder nach hinten kippen.

In einer alternativen Ausführungsform kann der Nutzer unmittelbar in der Bildsequenz navigieren, indem er das Dokument 100 in dem Feld bewegt. Beispielsweise können hierzu die Bilder B1 - Bₙ karussellförmig auf der Anzeige 102 wiedergegeben werden. Wenn der Benutzer das Dokument 100 beispielsweise nach rechts kippt, so dreht sich das Karussell entgegen des Uhrzeigersinns; kippt der Benutzer das Dokument 100 nach links, so dreht sich das Karussell mit dem Uhrzeigersinn aufgrund der von dem Signalerzeuger 101 sensierten Änderung der Antennenspannung.

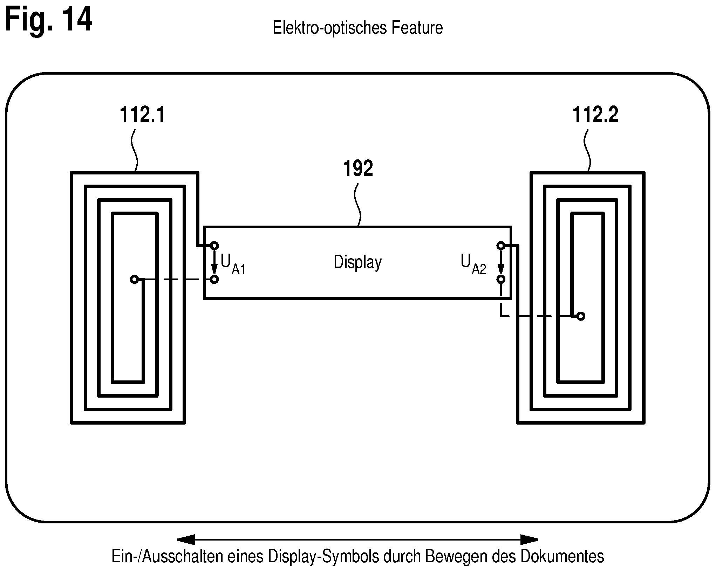

Die Figur 14 zeigt eine Ausführungsform des Dokuments 100 mit einer Ausgabeeinheit 192. Beispielsweise handelt es sich bei der Ausgabeeinheit 192 um ein optisches Sicherheitsmerkmal, welches durch Anlegen einer elektrischen Spannung ein- und ausgeschaltet werden kann, wie zum Beispiel ein auf den Dokumentenkörper des Dokuments 100 aufgedrucktes elektrochromes Symbol. Das Symbol kann zum Beispiel einen Schriftzug oder ein Wappen beinhalten. Zusätzlich kann das Dokument 100 weitere Sicherheitsmerkmale, insbesondere optische Sicherheitsmerkmale aufweisen.

Die Ausgabeeinheit 192 ist mit den beiden Antennen 112.1 und 112.2 elektrisch verbunden, welche im Prinzip so wie in der Ausführungsform gemäß Figur 4 angeordnet sind. Die Antennen 112.1 und 112.2 sind hier so ausgebildet, dass bei gleichem elektrischen Feldes die Antennenspannungen U_{A1} bzw. U_{A2} eine unterschiedliche Polarität haben. Wird das Dokument 100 beispielsweise von rechts nach links, das heißt in -X-Richtung, in ein elektromagnetisches Wechselfeld eingeführt, so wird zunächst in die Antenne 112.1 eine positive Spannung U_{A1} induziert, welche die Ausgabeeinheit 192 einschaltet, sodass diese zum Beispiel ein Symbol wiedergibt, indem dieses auf der Ausgabeeinheit 192 erscheint. Bei weiterer Bewegung des Dokuments 100 in -X-Richtung schwächt sich das Feld in der Antenne 112.1 ab, wohingegen sich die negative Spannung U_{A2} aufbaut, sodass das von der Ausgabeeinheit 192 angezeigte Symbol wieder gelöscht wird. Hierdurch ist ein optisches Sicherheitsmerkmal gegeben, durch welches sich ein Benutzer von der Echtheit des Dokuments 100 überzeugen kann.
Alternativ kann es sich bei der Ausgabeeinheit 192 um eine akustische Ausgabeeinheit, das heißt einen akustischen Signalgeber, handeln. Dieser kann zum Beispiel unterschiedliche Töne abgeben, je nach den anliegenden Antennenspannungen U_{A1} bzw. U_{A2}.

Die Ausgabeeinheit kann weitere elektronische Elemente enthalten, um die geeigneten Versorgungsspannungen für ein Displayelement bereitzustellen, wie z.B. Dioden, Zehnerdioden, Widerstände und Transistoren oder integrierte Schaltkreise.

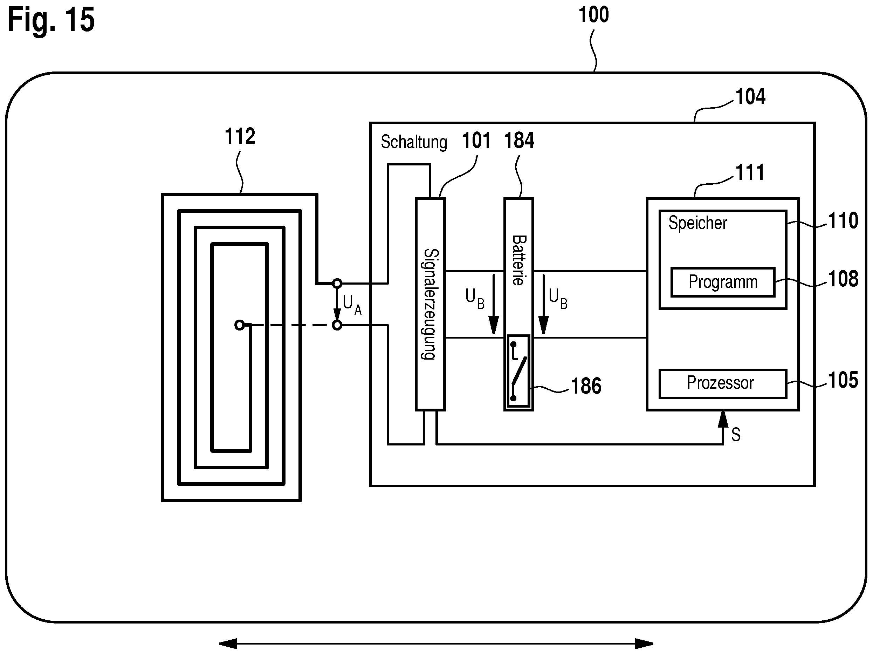

Die Figur 15 zeigt eine weitere Ausführungsform eines Dokuments 100. Das Dokument 100 hat bei dieser Ausführungsform eine Batterie 184 zur Lieferung der Betriebsspannung U_{B}. Diese Betriebsspannung U_{B} liegt an dem Signalerzeuger 101 und an der Schaltungskomponente 111 an. Diese Komponenten der Schaltung 104 werden also unabhängig von der Einkopplung von elektrischer Energie in die Antenne 112 durch die Batterie 184 mit elektrischer Energie versorgt. Dementsprechend kann das Programm 108 durch den Prozessor 105 auch dann ausgeführt werden, wenn sich das Dokument 100 nicht im Bereich eines Lesegeräts befindet. Wird das Dokument 100 in den Bereich zum Beispiel des Lesegeräts 182 (vergleiche Figuren 12 und 13) gebracht, und beschreibt der Nutzer mit dem Dokument 100 dann eine Geste, so wird dieses von dem Signalerzeuger 101 erkannt und das Eingabesignal S wird in das von dem Prozessor 105 ausgeführte Programm eingegeben.

Optional kann das Dokument 100 einen Schalter 186 aufweisen, der von einem Benutzer des Dokuments 100 betätigbar ist. Durch Betätigung des Schalters 186 kann ein Nutzer die Betriebsspannung U_{B} ein- und ausschalten, um dadurch die Lebensdauer der Batterie 184 zu verlängern. Durch Betätigung des Schalters 186 wird bei dieser Ausführungsform die Ausführung des Programms 108 gestartet.

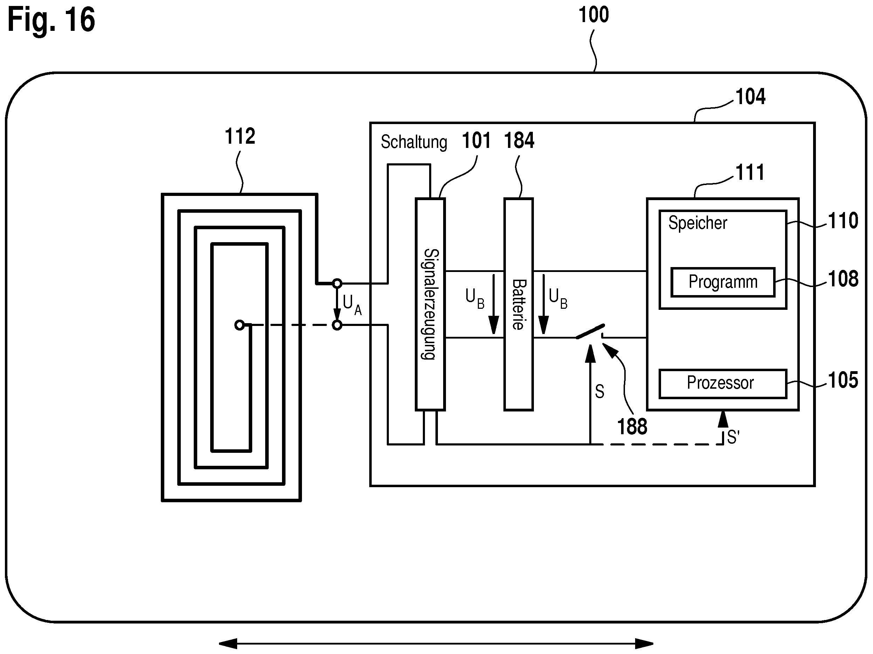

Die Figur 16 zeigt eine weitere Ausführungsform des Dokuments 100, bei der der Signalerzeuger 101 von der Batterie 184 permanent mit elektrischer Energie versorgt wird, wie in der Figur 16 gezeigt, wohingegen die Schaltungskomponente 111 über einen Schalter 188 mit der Batterie 184 verbunden ist. Im Normalzustand, das heißt so lange sich das Dokument außerhalb der Reichweite zum Beispiel des Lesegeräts 182 befindet und keine elektrische Energie in die Antenne 112 eingekoppelt wird, ist der Schalter 188 geöffnet, sodass die Schaltungskomponente 111 nicht mit einer Betriebsspannung versorgt wird und dementsprechend das Programm 108 nicht ausgeführt wird.

Wenn der Nutzer das Dokument 100 in die Reichweite des Lesegeräts 182 einbringt und dann eine räumliche Geste mit dem Dokument 100 beschreibt, so führt dies zur Erzeugung des Eingabesignals S durch den Signalerzeuger 101. Aufgrund dieses Eingabesignals wird der Schalter 188 geschlossen, sodass die Betriebsspannung U_{B} an der Schaltungskomponente 111 anliegt, woraufhin die Ausführung des Programms 108 durch den Prozessor 105 gestartet wird. Nachfolgend kann der Nutzer mit dem Dokument 100 eine weitere Geste beschreiben, was zur Erzeugung eines weiteren Eingabesignals S' durch den Signalerzeuger 101 führt. Dieses weitere Eingabesignal S' wird dann in das von dem Prozessor 105 ausgeführte Programm 108 eingegeben.

Je nach Ausführungsform kann der Schalter 188 als separates diskretes Element oder als integraler Bestandteil der Schaltungskomponente 111 ausgeführt sein.

Alternativ kann das Dokument 100 so ausgebildet sein, dass die Energieversorgung nur des Signalerzeugers 101 über die Antenne 112 erfolgt, d.h. der Signalerzeuger 101 ist bei dieser Ausführungsform nicht mit der von der Batterie 184 gelieferten Betriebsspannung U_{B}verbunden, wohingegen die Schaltungskomponente 111 wie in der Fig. 16 gezeigt von der Batterie 184 mit der Betriebsspannung U_{B} versorgt wird, wenn aufgrund des Signals S der Schalter 188 geschlossen wurde.

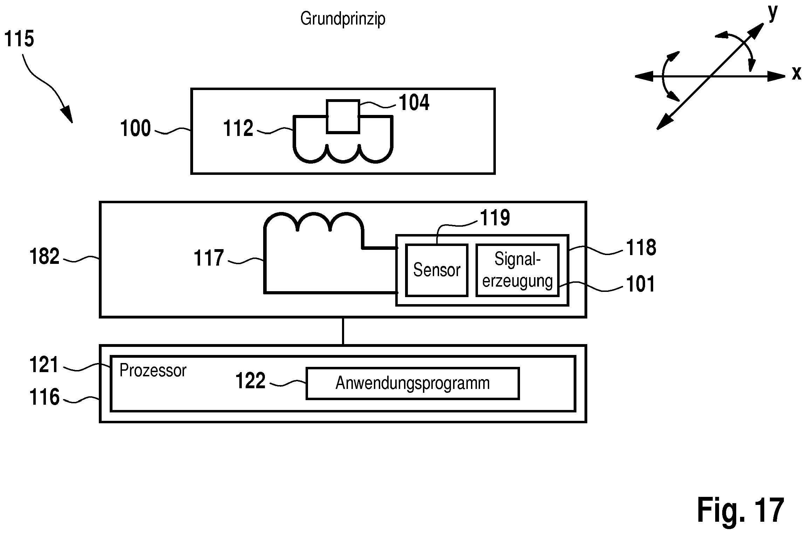

Fig. 17 zeigt ein elektronisches System 115 mit einem Dokument 100, einem Lesegerät 182 und einem Computer 116.

Das Dokument 100 hat eine Antenne 112 und eine Schaltung 104, wie z.B. einen sogenannten RFID-Chip oder einen NFC-Chip. Die Schaltung 104 kann entsprechend einer der vorstehend beschriebenen Ausführungsformen ausgebildet sein; es kann sich hier aber auch um einen üblichen, an sich aus dem Stand der Technik bekannten RFID- oder NFC-Chip handeln. Dies ermöglicht es, bereits in Umlauf gebrachte Dokumente weiterzuverwenden; diese müssen zur Implementierung des elektronischen Systems 115 nicht zwingend durch neue Dokumente ersetzt werden.

Das Lesegerät 182 hat zumindest eine Antenne 117, die an eine Schaltung 118 angeschlossen ist. Über die Schaltung 118 wird eine Spannung an die Antenne 117 angelegt, um mit dem Dokument 112 drahtlos zu kommunizieren und/oder zur Energieversorgung des Dokuments 100, z.B. nach einem an sich bekannten RFID-oder NFC-Verfahren. Die Schaltung 118 beinhaltet einen Sensor 119 zur Sensierung der Antennenspannung der Antenne 117, insbesondere der Amplitude der Antennenspannung. Insbesondere kann der Sensor 119 als sogenannter Hüllkurven-Empfänger ausgebildet sein.

Der Sensor 119 liefert ein Signal, welches die Größe der aktuellen Antennenspannung der Antenne 117 angibt. Dieses Signal wird in den Signalerzeuger 101 eingegeben, der das von dem Sensor 119 gelieferte Signal auswertet und, in Abhängigkeit von einem Ergebnis dieser Auswertung, ein Eingangssignal generiert.

Beispielsweise ist der Signalerzeuger 101 zur Durchführung einer Gestenerkennung ausgebildet. Hierzu vergleicht der Signalerzeuger 101 den zeitlichen Verlauf des von dem Sensor 119 empfangenen Signals mit einem vorgegebenen Muster. Bei hinreichender Übereinstimmung des Signalverlaufs mit dem Muster erkennt der Signalerzeuger 101 hieraus eine Geste. Daraufhin gibt der Signalerzeuger 101 ein der erkannten Geste zugeordnetes Eingabesignal ab und sendet dieses z.B. in Form einer sogenannten APDU (Application Protocoll Data Unit) an den Computer 116.

Der Computer 116 hat zumindest einen Prozessor 121 zur Ausführung eines Anwendungsprogramms 122. Das Anwendungsprogramm 122 ist mit dem Dokument 100 interoperabel. Beispielsweise ist das Anwendungsprogramm 122 zur Nutzung einer Chipkartenfunktion des Dokuments 100 ausgebildet, wie z.B. einer Signaturfunktion, einer Verschlüsselungsfunktion und/oder zum Lesen von Daten aus einem elektronischen Speicher des Dokuments 100. Beispielsweise kann das Anwendungsprogramm 122 für eine Zugangskontrolle zu einem geschützten Bereich und/oder zur Identitätsprüfung eines Benutzers des Dokuments 100 ausgebildet sein.

Zur Kommunikation mit dem Dokument 100 sendet das Anwendungsprogramm 122 nach einem Chipkartenprotokoll z.B. in Form sogenannter APDUs Anforderungen über das Lesegerät 182 an das Dokument 100, welches dieses mit entsprechenden APDU-Antworten beantwortet, welche das Anwendungsprogramm 122 ebenfalls über das Lesegerät 182 empfängt, wie an sich aus dem Stand der Technik bekannt. Zusätzlich kann das Anwendungsprogramm 122 von dem Signalerzeuger 101 das von diesem erzeugte Eingabesignal empfangen, nämlich dann, wenn der Benutzer mit dem Dokument 100 eine Relativbewegung zu dem Lesegerät 182 ausführt, insbesondere in Form einer Geste.

Dies kann so erfolgen, dass der Benutzer das Dokument 100 zunächst an das Lesegerät 182 annähert, was einen entsprechend großen Kopplungsfaktor zwischen der primärseitigen Antenne 117 und der sekundärseitigen Antenne 112 zur Folge hat. Aufgrund der dadurch bedingten relativ großen primärseitigen Last sinkt die von dem Sensor 119 sensierte Antennenspannung der Antenne 117. Entfernt der Benutzer das Dokument 100 anschließend ein Stück weit von dem Lesegerät 182, so sinkt dementsprechend der Kopplungsfaktor sowie die durch das Dokument 100 für die Primärseite gebildete Last, so dass dementsprechend die von dem Sensor 119 sensierte Spannung ansteigt. Wenn der Benutzer also mit dem Dokument 100 relativ zu dem Lesegerät 182 eine charakteristische Bewegung, also eine Geste, durchführt, so dass der Kopplungsfaktor hierdurch eine zeitliche Variation erfährt, so hat dies einen entsprechenden zeitlichen Verlauf des von dem Sensor 119 gelieferten Signals zur Folge und die entsprechende Geste kann von dem Signalerzeuger 101 erkannt werden.

Hierdurch kann beispielsweise für eine Zugangskontrolle eine zusätzliche Sicherheit geschaffen werden. Als Bedingung für die Gewährung eines Zutritts, wie z.B. die Erzeugung eines Signals zur Öffnung einer Schranke oder einer anderen Zugangssperre, kann durch das Anwendungsprogramm folgende Voraussetzung definiert sein:
- es muss z.B. ein bestimmter Identifikator in dem elektronischen Speicher des Dokuments 100 gespeichert sein und
- es muss das Eingabesignal vorliegen.

Wenn das Dokument 100 in die Reichweite des Lesegeräts 182 eingebracht wird, liest also das Anwendungsprogramm 122 den Identifikator aus dem Lesegerät 100 aus, und prüft, ob dieser Identifikator gültig ist. Zusätzlich muss das Anwendungsprogramm das Eingabesignal von dem Signalerzeuger 101 empfangen. Nur wenn beide Bedingungen erfüllt sind, erzeugt das Anwendungsprogramm 122 das Signal zur Gewährung des Zutritts. Dies hat den Vorteil, dass neben dem Besitz des Dokuments 100 eine weitere Voraussetzung zur Erlangung des Zutritts zu dem geschützten Bereich ist, dass der Benutzer des Dokuments 100 Kenntnis von der Geste hat, welche mit dem Dokument 100 auszuführen ist. Auch bei einem Verlust des Dokuments 100 kann ein Dritter also nicht ohne Weiteres unberechtigten Zutritt erlangen.

Nach einer Ausführungsform der Erfindung ist der Signalerzeuger 101 zur Prüfung der Authentizität des Benutzers des Dokuments ausgebildet, indem das Eingabesignal nur dann erzeugt wird, wenn der sensierte zeitliche Verlauf der Antennenspannung oder der Antennenspannungen mit einem vordefinierten Referenzverlauf übereinstimmt.
Nach Ausführungsformen der Erfindung kann der Signalerzeuger 101 durch den Computer 116 oder eine Kombination des Computers 116 und des Lesegerätes 182 gebildet werden. Beispielsweise kann der Signalerzeuger durch Ausführung eines entsprechenden Programms von dem Prozessor 121 gebildet werden. In diesem Fall werden die von dem Sensor 119 erzeugten Signale in den Prozessor 121 eingegeben.

Der Computer 116 und das Lesegerät 182 können auch eine bauliche Einheit bilden. Beispielsweise kann es sich hierbei um einen Personal Computer mit einem integrierten Lesegerät oder ein mobiles Gerät, wie z.B. ein Smartphone, einen Tablet-PC oder einen Laptop-Computer mit einem integrierten Lesegerät handeln.

Nach einer Ausführungsform der Erfindung kann durch die Gestenerkennung ein mechanisches Schaltelement des Dokuments 100 eingespart werden. Anstelle der Betätigung z.B eines Druckschalters des Dokuments 100 kann der Benutzer mit dem Dokument 100 eine Geste ausführen, welche ein Eingangssignal zur Folge hat, welches einem durch die Betätigung eines Schalters erzeugten Eingabesignals gleicht und von dem Lesegerät 182 empfangen wird..

Nach einer Ausführungsform der Erfindung kann das erfinderische Konzept auf der logischen Ebene des Anwendungsprogramms 122 implementiert sein. In diesem Fall können ein Dokument 100 und ein Lesegerät 182 zum Einsatz kommen, wie sie an sich aus dem Stand der Technik bekannt sind, d.h. eine Veränderung der Hardware ist nicht erforderlich. Dies kann dadurch erreicht werden, dass die Funktionalität des Sensors 119 und des Signalerzeugers 101 in dem Lesegerät 182 durch eine Firmware implementiert sind. Ein handelsübliches Lesegerät 182, welches einen Firmwareupdate ermöglicht, kann also aufgrund eines solchen Firmwareupdates die entsprechenden Funktionalitäten erlangen.

Nach einer weiteren Ausführungsform der Erfindung erfolgt die Gestenerkennung durch das Anwendungsprogramm 122 selbst. Das Anwendungsprogramm 122 benötigt in diesem Fall kein Eingabesignal von dem Signalerzeuger 101, sondern erzeugt dieses Eingabesignal selbst. Hierzu muss ein Benutzer beispielsweise das Dokument 100 zunächst in die Reichweite des Lesegerätes 182 bringen. Dieses wird von dem Lesegerät 182 sensiert, wie an sich aus dem Stand der Technik bekannt, woraufhin das Anwendungsprogramm 122 den Identifikator aus dem Dokument 100 ausliest. Der Benutzer muss daraufhin das Dokument 100 wieder aus der Reichweite des Lesegerätes 182 entfernen und anschließend wieder in die Reichweite einbringen. Daraufhin liest das Anwendungsprogramm 122 erneut den Identifikator aus dem Dokument 100 aus. Dieser Vorgang muss von dem Benutzer beispielsweise n-fach wiederholt werden, wobei n vorgegeben ist. Wenn n z.B. gleich 3 ist, so muss der Benutzer das Dokument 100 dreimal hintereinander z.B. innerhalb eines vorgegebenen Zeitintervalls einer Länge von beispielsweise 15 Sekunden in die Reichweite des Lesegeräts 182 einbringen und wieder von dort entfernen. Nur wenn das Anwendungsprogramm 122 n-fach, d.h. hier dreimal, den selben Identifikator aus dem Dokument 100 innerhalb des vorgegebenen Zeitintervalls ausliest, ist die zusätzliche Bedingung, für z.B. die Gewährung des Zutritts, erfüllt. Diese Ausführungsform ist besonders vorteilhaft, da sie nutzerseitig z.B. durch Herunterladen des Anwendungsprogramms 122 über ein Netzwerk, wie z.B. das Internet, implementiert werden kann.

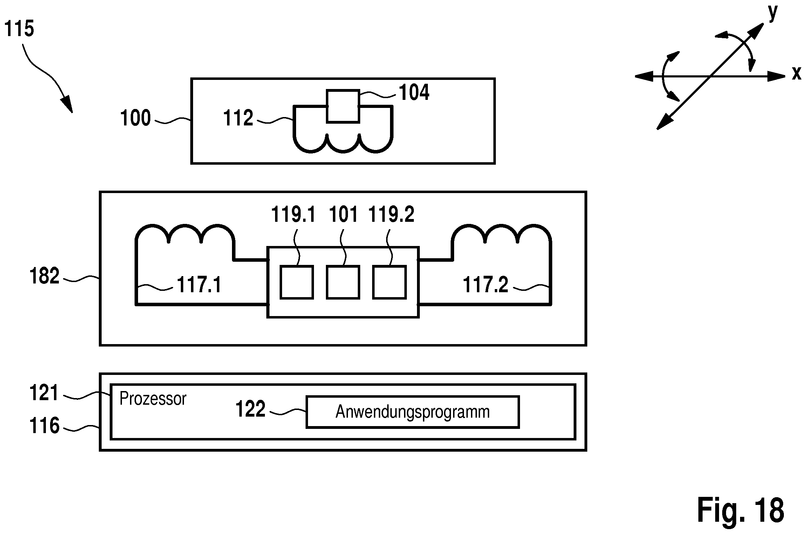

Die Fig. 18 zeigt eine Weiterbildung der Ausführungsform gemäß Fig. 17, wobei das Lesegerät 182 zumindest zwei Antennen 117.1 und 117.2 aufweist. Die Anordnung dieser Antennen 117.1 und 117.2 in dem Lesegerät 182 kann analog zu der Anordnung der Antennen 112.1 und 112.2 in dem Dokument 100 gemäß der Ausführungsform nach Fig. 4 erfolgen.

Der Sensor 119.1 dient zur Sensierung der Antennenspannung der Antenne 117.1 und zur Eingabe eines entsprechenden Signals in den Signalerzeuger 101. Entsprechend verhält es sich für den Sensor 119.2, welcher die Antennenspannung der Antenne 117.2 sensiert und ein entsprechendes Signal erzeugt, welches in den Signalerzeuger 101 eingegeben wird. Der Signalerzeuger 101 wertet die von den Sensoren 119.1 und 119.2 empfangenen Signale aus, beispielsweise um eine räumliche Geste, die der Benutzer mit dem Dokument 100 beschreibt, zu erkennen und daraufhin ein entsprechendes Eingabesignal zu erzeugen.

Alternative Antennenanordnungen für das Lesegerät 182 können entsprechend den Antennenanordnungen für das Dokument 100 gemäß den Fig. 5 bis 10 gewählt werden.

Die weiteren Antennen haben den Vorteil einer verbesserten räumlichen Auflösung der Bewegung des Dokuments 100, so dass auch die Erkennung komplexerer Gesten hierdurch ermöglicht wird.

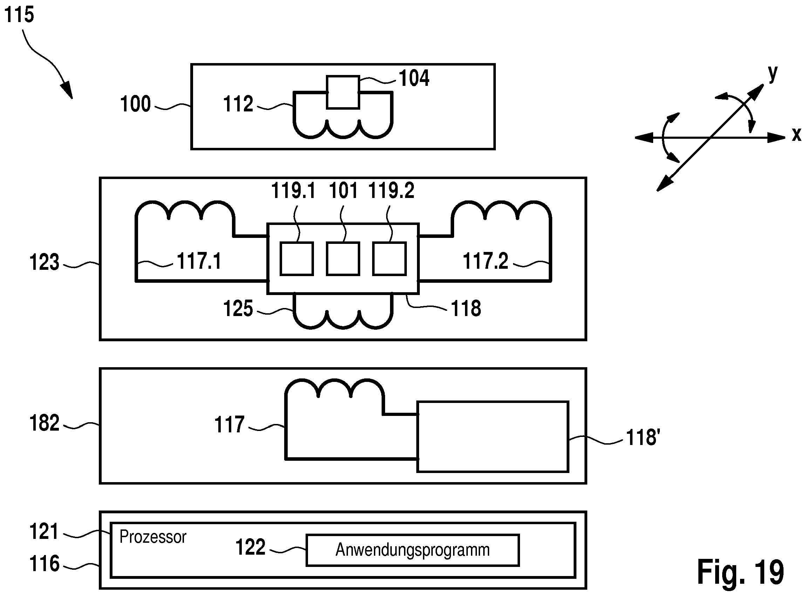

Die Fig. 19 zeigt eine weitere Ausführungsform eines elektronischen Systems 115. Bei der hier betrachteten Ausführungsform kommt ein Adapter 123 für das Lesegerät 182 zum Einsatz, um das Eingangssignal zu erzeugen, welches dann von dem Adapter 123 über das Lesegerät 182 zu dem Computer 116 übertragen wird. In diesem Fall kann der Benutzer ein bereits vorhandenes übliches Lesegerät mit einer üblichen Schaltung 118' weiterverwenden, da eine Ausführungsform der Erfindung in dem Adapter 123 implementiert ist.

Hierzu ist der Adapter 123 analog zu dem Lesegerät 182 in der Ausführungsform gemäß Fig. 18 aufgebaut. Der Adapter 123 hat eine zusätzliche kontaktlose Schnittstelle mit einer Antenne 125, wobei diese zusätzliche Schnittstelle elektrisch und logisch der kontaktlosen Schnittstelle des Dokuments 100 gleicht.

Wird von dem Lesegerät 182 also eine APDU an das Dokument 100 gesendet, so wird diese mithilfe der Antenne 125 durch den Adapter 123 empfangen und dann z.B. über die Antennen 117.1 und 117.2 erneut ausgesendet, so dass die APDU von dem Dokument 100 empfangen wird. Ebenso verhält es sich in die umgekehrte Richtung: Sendet das Dokument 100 eine APDU aus, so wird diese mithilfe der Antennen 117.1 und 117.2 des Adapters 123 empfangen und von dem Adapter 123 über die Antenne 125 an das Lesegerät 182 weitergeleitet. Die Funktionalität des Adapters 123 entspricht also der eines Relais.

Wenn der Signalerzeuger 101 des Adapters 123 das Eingangssignal erzeugt, so wird dieses als APDU von dem Adapter 123 über die Antenne 125 ausgesendet und von dem Lesegerät 182 mit seiner Antenne 117 empfangen. Alternativ erfolgt die Übertragung der APDUs unmittelbar zwischen dem Lesegerät 182 und dem Dokument 100, wobei der Adapter 123 dann nur die oben beschriebene Funktion zur Erzeugung des Eingabesignals und dessen Übertragung zu dem Lesegerät 182 hat, nicht aber die Relais Funktion.

### Bezugszeichenliste

- 100: Dokument
- 101: Signalerzeuger
- 102: Anzeigevorrichtung
- 103: Längsachse
- 104: Schaltung
- 105: Prozessor
- 106: Treiber
- 107: Querachse
- 108: Programminstruktionen
- 109: Überspannungsschutz
- 110: elektronischer Speicher
- 111: Schaltungskomponente
- 112: Antenne
- 114: Energiespeicher
- 115: elektronisches System
- 116: Computer
- 117: Antenne
- 118: Schalterung
- 119: Sensor
- 120: Nutzer-Schnittstelle
- 121: Prozessor
- 122: Anwendungsprogramm
- 123: Adapter
- 124: Bedienelement
- 125: Antennen
- 126: Programminstruktionen
- 128: Bedienelement
- 130: Bedienelement
- 164: textuelle Daten
- 166: Bilddaten
- 168: Signal S
- 180: Schnittstelle
- 180': Schnittstelle
- 182: Lesegerät
- 184: Batterie
- 186: Schalter
- 188: Schalter

## Patentansprüche

1. Dokument (100) mit einer optischen und/oder akustischen Ausgabeeinheit (192) mit zumindest ersten und zweiten Antennen (112.1, 112.2) zur kontaktlosen Einkopplung von elektrischer Energie eines elektromagnetischen Feldes für den Betrieb der Ausgabeeinheit, wobei die ersten und zweiten Antennen jeweils erste und zweite Kontakte aufweisen, wobei bei einer definierten Feldstärke zwischen dem ersten und zweiten Kontakt der ersten Antenne eine erste Spannung erzeugt wird, deren Polarität einer zwischen dem ersten und zweiten Kontakt der zweiten Antenne aufgrund der Feldstärke erzeugten Spannung entgegengesetzt ist, wobei die erste und zweite Antenne räumlich versetzt auf oder in dem Dokument angeordnet und mit der Ausgabeeinheit elektrisch verbunden sind, sodass die Ausgabeeinheit aufgrund einer Bewegung des Dokuments in einem elektromagnetischen Feld unterschiedliche Spannungssignale von den ersten und zweiten Antennen empfängt.

2. Dokument nach Anspruch 1, wobei es sich bei der Ausgabeeinheit um ein elektrochromes Symbol handelt, welches durch das Spannungssignal der ersten Antenne ein- und durch das Spannungssignal der zweiten Antenne ausgeschaltet wird.

3. Dokument nach Anspruch 2, wobei das elektrochrome Symbol aufgedruckt ist.

4. Dokument nach Anspruch 1, wobei es sich bei der Ausgabeeinheit um einen akustischen Signalgeber handelt, welcher aufgrund des Spannungssignals der ersten Antenne einen ersten Ton und aufgrund des Spannungssignals der zweiten Antenne einen zweiten Ton erzeugt.

5. Dokument nach einem der vorhergehenden Ansprüche 1 bis 4, wobei es sich um ein Wert- oder Sicherheitsdokument handelt, insbesondere um ein papierbasiertes und/oder kunststoffbasiertes Dokument, wie zum Beispiel ein Ausweisdokument, insbesondere einen Reisepass, Personalausweis, Visum oder einen Führerschein, Fahrzeugschein, Fahrzeugbrief, Firmenausweis, Gesundheitskarte oder ein anderes ID-Dokument oder eine Chipkarte, Zahlungsmittel, insbesondere eine Banknote, Bankkarte oder Kreditkarte, einen Frachtbrief oder einen sonstigen Berechtigungsnachweis.

6. Verfahren zur Prüfung der Echtheit eines Dokuments nach einem der Ansprüche 1 bis 5, wobei das Dokument von einem Benutzer durch ein elektromagnetisches Feld geführt wird, um durch die Bewegung des Dokuments eine Geste zu beschreiben, aufgrund derer eine vordefinierte Ausgabe über die Ausgabeeinheit des Dokuments erfolgt.

## Claims

1. A document (100) having an optical and/or acoustic output unit (192), with at least first and second antennas (112.1, 112.2) for contactless coupling-in of electrical energy of an electromagnetic field for the operation of the output unit, wherein the first and second antennas each have first and second contacts, wherein, at a defined field strength, a first voltage is generated between the first and second contact of the first antenna, the polarity of said voltage being opposite that of a voltage generated between the first and second contact of the second antenna on account of the field strength, wherein the first and second antennas are arranged in a spatially offset manner on or in the document and are electrically connected to the output unit, such that the output unit receives different voltage signals from the first and second antennas on account of a movement of the document in an electromagnetic field.

2. The document according to claim 1, wherein the output unit is an electrochromic symbol, which is switched on by the voltage signal of the first antenna and is switched off by the voltage signal of the second antenna.

3. The document according to claim 2, wherein the electrochromic symbol is imprinted.

4. The document according to claim 1, wherein the output unit is an acoustic signal transmitter which generates a first sound on account of the voltage signal of the first antenna and generates a second sound on account of the voltage signal of the second antenna.

5. The document according to any one of the preceding claims 1 to 4, wherein the document is a document of value or a security document, in particular a paper-based and/or plastic-based document, for example an identity document, in particular a passport, identity card, visa or a driver's license, a vehicle registration document, vehicle title, company identification document, health insurance card, or another ID document or a chip card, means of payment, in particular a banknote, bank card or credit card, a consignment note, or another proof of authority.

6. A method for checking the authenticity of a document according to any one of claims 1 to 5, wherein the document is guided by a user through an electromagnetic field in order to describe a gesture by means of the movement of the document, on the basis of which a predefined output is provided via the output unit of the document.

## Revendications

1. Document (100) doté d'une unité de sortie (192) optique et/ou acoustique avec au moins des premières et deuxièmes antennes (112.1, 112.2) pour le couplage sans contact d'énergie électrique d'un champ électromagnétique pour le fonctionnement de l'unité de sortie, où les premières et deuxièmes antennes présentent respectivement des premiers et deuxièmes contacts, où, pour une intensité de champ définie entre le premier et le deuxième contact de la première antenne, une première tension est générée dont la polarité est opposée à celle d'une tension générée du fait de l'intensité de champ entre le premier et le deuxième contact de la deuxième antenne, où la première et la deuxième antenne sont décalées dans l'espace ou sont disposées dans le document et sont reliées électriquement avec l'unité de sortie de sorte que l'unité de sortie, en raison d'un déplacement du document dans un champ électromagnétique, reçoit des signaux de tension différents des premières et des deuxièmes antennes.

2. Document selon la revendication 1, dans lequel, dans le cas de l'unité de sortie, il s'agit d'un symbole électrochrome, lequel est activé par le signal de tension de la première antenne et désactivé par le signal de tension de la deuxième antenne.

3. Document selon la revendication 2, dans lequel le symbole électrochrome est imprimé.

4. Document selon la revendication 1, dans lequel, dans le cas de l'unité de sortie, il s'agit d'un indicateur de signal acoustique, lequel, en raison du signal de tension de la première antenne, génère un premier son, et en raison du signal de tension de la deuxième antenne, génère un deuxième son.

5. Document selon l'une des revendications précédentes 1 à 4, dans lequel il s'agit d'un document de valeur ou de sécurité, notamment un document à base de papier et/ou à base de matière plastique, comme, par exemple, un document d'identité, notamment un passeport, une carte d'identité, un visa ou un permis de conduire, un certificat d'immatriculation de véhicule, un document d'enregistrement de véhicule, une carte d'entreprise, une carte de santé ou un autre document d'identification ou une carte à puce, un moyen de paiement, notamment un billet de banque, une carte bancaire ou une carte de crédit, un bon de transport ou un autre justificatif.

6. Procédé pour la vérification de l'authenticité d'un document selon l'une des revendications 1 à 5, dans lequel le document est passé à travers un champ électromagnétique par un utilisateur afin de décrire un geste par le mouvement du document en fonction duquel une indication prédéfinie est effectuée par l'intermédiaire de l'unité de sortie.
